(19) **Europäisches Patentamt**
**European Patent Office**
**Office européen des brevets**

(11) **EP 3 704 600 B1**

(12) **EUROPEAN PATENT SPECIFICATION**

(45) Date of publication and mention
of the grant of the patent:
**05.06.2024 Bulletin 2024/23**

(21) Application number: **19703454.9**

(22) Date of filing: **11.01.2019**

(51) International Patent Classification (IPC):
**G06N 5/022** *(2023.01)* **G06N 5/01** *(2023.01)*
**G06F 16/28** *(2019.01)*

(52) Cooperative Patent Classification (CPC):
**G06F 16/28; G06N 5/01; G06N 5/022**

(86) International application number:
**PCT/US2019/013266**

(87) International publication number:
**WO 2020/145989 (16.07.2020 Gazette 2020/29)**

(54) **REDUCING ERRORS INTRODUCED BY MODEL UPDATES**

VERRINGERUNG VON DURCH MODELLAKTUALISIERUNGEN EINGEFÜHRTEN FEHLERN

RÉDUCTION D'ERREURS INTRODUITES PAR MISES À JOUR DE MODÈLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.09.2020 Bulletin 2020/37**

(73) Proprietor: **Google LLC
Mountain View, CA 94043 (US)**

(72) Inventors:
• **FRAZIER, Zachary Charles
Mountain View, CA 94043 (US)**
• **ULBRICH, Andreas
Mountain View, CA 94043 (US)**
• **VAUGHAN, Thomas A.
Mountain View, CA 94043 (US)**

• **WANG, Zhe
Mountain View, CA 94043 (US)**
• **TSAI, Shen-fu
Mountain View, CA 94043 (US)**
• **SKVORTSOV, Evgeny
Mountain View, CA 94043 (US)**

(74) Representative: **Smith, Jeremy Robert et al
Kilburn & Strode LLP
Lacon London
84 Theobalds Road
London WC1X 8NL (GB)**

(56) References cited:
**WO-A1-2017/181932    US-A1- 2014 172 754
US-B1- 9 098 326**

**Description**

BACKGROUND

This document relates to providing a model generation process that reduces discrepancies in output introduced by changes to an analytical model. For a particular input, an updated model may use a different decision path to determine the output for the particular input than a previous version of the model would. Variations in paths- and consequently outputs- between different models can result in inaccurate assignment of populations based on the models.

WO2017/181932 A1 describes a system and a method for determining an estimated time of arrival (ETA) for a route, based on a model of ETA. The system may perform the method to obtain a first electrical signal associated with at least one route having at least one road section; generate and save first structured data of at least one global feature vector and at least one historical duration associated with the at least one route based on the first electrical signal; generate second structured data of a model of ETA by training the model based on the at least one global feature vector and the at least one historical duration; and save the second structured data of the model of ETA in the at least one non-transitory computer-readable storage medium.

US9098326 B1 describes a high-level computational framework for parallel operations on large datasets. There is at least one, and generally several, instances of an architecture deployment. The term "architecture deployment" is used in that document to mean a cooperating group of processes together with the hardware on which the processes are executed. The active architecture deployments together form a system that dynamically processes jobs requested by a user-customer, in accordance with customer's monetary budget and other criteria, in a robust and automatically scalable environment.

SUMMARY

In a first aspect, a method is provided according to claim 1. Optional features are set out in dependent claims 2 to 9. In a second aspect, a system is provided according to claim 10 for carrying out the method of any of claims 1 to 9. In a third aspect, a computer storage medium is provided according to claim 11. Optional features are set out in claims 12 to 14.

In general, one example of the subject matter described in this specification can be embodied in a method that includes receiving, as input at one or more data processing apparatus, an original model and a new model that was generated from the original model but differs from the original model, mapping, by the one or more data processing apparatus, structures of the new model to structures of the original model, classifying, by the one or more data processing apparatus and based on the mapping, each structure of the new model as belonging to a group of structures sharing at least one characteristic, generating, by the one or more data processing apparatus and based on the mapping and the classifying, a merged model; and classifying, by the one or more data processing apparatus and using the merged model, a plurality of unique entities by applying consistent hashing to each of the plurality of unique entities, including: assigning, using the merged model, persistent identifiers to each of a plurality of unique entities, wherein the persistent identifier classifies the unique entity into a particular group of structures in the new model.

These and other examples can each optionally include one or more of the following features.

In some implementations, each group of structures is one of: (i) a group of the original model, (ii) an unused group that did not exist in the original model, (iii) a group that is a subset of a group of the original model, or (iv) a group that is a merged set of a first group of the original model and a second, different group of the original model. In some implementations, weightings of the consistent hashing provide an aggregate likelihood that assignment of a particular group of structures occurs and are the same as weightings of consistent hashing of the new model. In some implementations, the original model, the new model, and the merged model implement a tree structure. In some implementations, the assigning comprises applying jump hashing of an ordered set of the persistent identifiers to the unique entity. In some implementations, the consistent hashing is a weighted consistent hashing with affinity ranking. In some implementations, the merged model generates a probability of a unique entity being assigned to a persistent identifier in a particular group of structures. In some implementations, the particular group of structures indicates a set of demographic attributes of a persistent identifier in the particular group of structures. In some implementations, the naming is performed to minimize a number of instances in which a particular entity is labelled with a first persistent identifier by the original model, and the particular entity is labelled with a second, different persistent identifier by the merged model.

Other examples of this aspect include corresponding systems, apparatus, and computer programs, configured to perform the actions of the methods, encoded on computer storage devices.

Particular examples of the subject matter described in this document can be implemented so as to realize one or more of the following advantages. In certain environments, there has previously been no way to reduce the impact of a model update on the output of the model. When a model assigns a particular input to a particular output and an update to the model results in the same particular input being assigned to a different output, inconsistencies and inefficiencies can arise from the differences in output. For example, if a model outputs an allocation of an input resource and an update results in a different allocation of the same input resource while maintaining an overall allocation distribution, reallocating the resource results in inefficiencies.

In some implementations of this new system, one way to reduce, for example, overcounting of the number of unique identifiers assigned to a particular event or event type on an aggregate level, is to rollout a model by releasing new models for particular portions of a population over a period of time. While this approach reduces overcounting for populations reached over a short period of time, overcounting remains an issue for large reporting windows, particularly for counting reach, or impact, of a variable on a population.

When a new model is released, the system can generate a third model using the new model and the original model to minimize the number of events that switch assignments to a unique identifier in order to reduce overcounting.

In other words, the improved update process can reduce reallocation of resources that have already been allocated to a particular task or location. Reducing allocations (i.e. inputting the same data and receiving a different output location in memory) the improved update process improves the efficiency of the system that performs allocations based on the model. It is well known, for example, reads and writes to memory or to persistent storage may be a performance bottleneck. By consistently assigning the same set of data to the same location in data, the system reduces the number of clock cycles and memory accesses needed to reallocate the data. Additionally, the system reduces inaccuracies in aggregate-level statistics of the memory allocations-the system prevents overcounting of the amount of data in sectors of memory by optimizing a third model to minimize differences in output allocations between the new model and the original model while retaining the statistical properties of the new model.

Further, the improved update process improves efficiencies in the domains and processes that are being modelled. For example, the update process can reduce reallocations of server resources to prevent wasted CPU cycles. The process can reduce allocations of memory to prevent wasted resources when shifting data in and out of memory. This process increases performance, reducing processing time and making memory management more efficient. By preventing reallocations, the improved update process requires fewer computing resources to arrive at the same updated output, thereby providing a more efficient and effective model updating process. In addition to logical allocations, the update process can reduce reallocation of physical assets within a real-world environment. For example, where the model provides an allocation of robot agents (such as handling, cleaning, picking or packing robots) to areas of a warehouse, the update process may reduce reallocation of robot agents between dispersed areas of a warehouse or warehouse complex thereby reducing effective downtime resulting from robots moving between areas when the model is updated. Similarly, the update process may reduce reallocation of vehicles such as delivery vehicles (e.g. drones, trucks, etc.) between, e.g. distribution centers, delivery routes or products. Where the model provides an allocation of user interface devices to different rooms or areas of a building (e.g. to provide effective coverage), the update process may reduce reallocation of those devices thereby preventing inefficiencies resulting from a need to move those devices to new areas when the model is updated.

The ability to reduce the number of reallocations to implement an updated model is becoming increasingly important-third parties value the accuracy of models used to estimate reach statistics, computing load, memory load, etc. By providing a more statistically accurate model, the system improves the utility of the models and the overall efficiency of processes depending on the results of the modelling. For example, memory management decisions made based on the model allocations of data would be more accurate, and would result in fewer moves of data or better load balancing. This improved updating process can be performed based on existing modeling techniques by leveraging hashing techniques.

The techniques described in this document enable a system to use fewer resources and perform fewer operations to arrive at new allocations, identify previous allocations, even if the allocation isn't in the new model, and identify where resources were already allocated so reallocations do not have to be made.

Particularly because new models and updates to models may be released periodically, the integrity of an analytical system is maintained by preventing degradation in system accuracy through cumulative inaccuracies introduced by each update. The system reduces inconsistencies between model updates, and makes the model more consistent over iterative updates.

The system merges the new model and the original model by determining allocations from each model and mapping the allocations from the new model to the allocations from the original model. Leveraging this method allows for similar utility to the new model, i.e., improvements to the statistical properties of the model, while minimizing the differences between the outputs of the new model and the original model.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example environment for which analytical models can be developed.
FIG. 2 shows an example decision tree model.
FIG. 3 illustrates a node population matching process.
FIGS. 4A-4B show an example process for identifying and selecting population pools for a third model generated from an original model and a new model.
FIG. 5 illustrates a process for matching and merging population pools of an original model and a new model.
FIG. 6A shows an example process of mapping a new model to the original model to reduce reallocations of an input to various outputs.
FIG. 6B illustrates an example process for reassigning unique identifiers based on an updated census.
FIG. 7 is a flow chart of an example process for generating an analytical model using a new model and an original model.
FIG. 8 is a block diagram of an example computing system.

Like reference numbers and designations in the various drawings indicate like elements.

DETAILED DESCRIPTION

This document describes methods, systems, and devices that improve output consistency between analytical models. In some situations, a model update results in a different output for the same unique input, and discrepancies between results of the updated model and the original model can result in inefficiencies. If a decision tree model provides output that represents an allocation of a resource, differences between results of the previous model and the new model can cause resources to be reallocated. For example, if a decision tree model receives input representing a seat in a meeting room in building A and provides output representing a unique person to be assigned to the seat within building A, but the unique person was already assigned to a seat within a different meeting room in building B by a previous version of the model, inconveniences to the person and inefficiencies in scheduling would result from moving the person into a meeting room in a different building. In another example, if a model receives input representing a computing event at a particular location in memory and provides output representing data to be assigned to the location, and the data is already within a different location in memory, reallocating the data would require additional, unnecessary computing resources.

The improved system receives two models as input-the original, or older, model having particular statistical characteristics, and a new model having statistical characteristics different from the old model's characteristics. The system then outputs a third model that minimizes differences between the original model and the new model by performing a mapping process utilizing three steps: identifying the pools of resources from which the original model and the new model make allocations, mapping the pools of the new model to pools of the old model, and installing consistent hashing to bring consistency across different models or versions of models.

Constraints for the generation of a third model can be given a formal problem definition, in which there are m sets of events of different types $c_1, ..., c_m$, a set $P$ of unique identifiers, event attachment probability functions $f_j$, an event to unique identifier assignment $C: c_1 \cup ... \cup c_m \rightarrow P$ sampled according to $f_j$, and a new activity density function (ADF) $A'$. Informally, the system must find (1) new event attachment probability functions $f'_j$ and (2) an event to unique identifier assignment $C'$ that collectively implement $A'$ and have the least impact. Without loss of generality, an assumption is made that both models have the same set of types of events; otherwise, the Cartesian product of the set of types of events of the old model and the new model. An additional assumption is that there is only one type of unique identifiers; models with multiple types of unique identifiers are decomposed into multiple independent models-one per unique identifier type.

Rolling out a new model means that the system must reassign unique identifiers to implement a new aggregate reach surface. In some implementations, the system retains assignments of unique identifiers to a particular event. Events analyzed under both the old model and the new model and assigned to two different unique identifiers would have two assignments, leading to overcounting for time intervals that span both models.

When third parties perform model rollout strategy validation, the measures of interest include the impact of the model rollout on target populations. The impact of model rollout on a random small, high-frequency campaign of events can be used as an efficient, simple proxy for direct model rollout impact. High-frequency campaigns attempt to reach the same unique identifiers with the same event at least a threshold number of times within a predetermined period of time. For example, a campaign event that reaches each unique identifier an average of 5 times in one week (or with some other frequency) can belong to a campaign classified as high-frequency. Small, high-frequency campaigns are affected by model rollout the most. For each small, high-frequency campaign, events are assigned to unique identifiers, and each event is reached multiple times. This means that each switch of event assignment to a different unique identifier leads to one instance of identifier overcounting; thus, model rollout impact on small, high-frequency campaigns is proportional to the total number of event reassignments represented by Equation 1:

$$R^{C \to C\prime} = |\{c \mid C(c) \neq C'(c)\}| \qquad (1)$$

The formal problem definition is to find event attachment probability functions $f_j$ and an event to unique identifier assignment $C$' that collectively implement $A$' and minimize $R^{C \to C\prime}$.

An assumption is made that there is a natural way to get from ADF $A$' to a set of event attachment probability functions $\{\widetilde{f_j}\}$. This correspondence exists modulo permutation of unique identifiers. Thus, these functions are defined over a different set of unique identifiers P'. The minimal impact problem can be solved utilizing two steps: (1) find a map $a: P \to P$' and define Equation 2:

$$f_j'(x) = \widetilde{f_j}(a(x)) \qquad (2)$$

and (2) make the set of events $C^{\cdot 1}(x)$ (i.e., event assigned to unique identifier x in the new assignment) to implement $\widetilde{f_j}(x)$ by modifying a set of events $C^{\cdot 1}(x)$ that was implementing $f_j(x)$. To understand the utility function for an optimal map $a$, Step (2) will be explained and performed assuming that $a$ is already partially computed.

A problem constraint is that the goal of the system is to implement the new model. For each event, a unique identifier needs to be selected independently from other events, meaning that Step (1) cannot be performed with the knowledge of event to unique identifier assignments. In Step (2), the unique identifier assignments must be changed independently event to event.

Once the system has reached the step of event reassignment, a new set of event attachment probability functions $f_j'(x)$ is defined. The a priori probability that an event will be reassigned can be computed using Equation 3:

$$\int_y \max(0, f_j'(y) - f_j(y)) \qquad (3)$$

which will be denoted by $D(f_j', f_j)$. For completeness of understanding, if integrals of $f_j'$ and $f_j$ (i.e., derivatives of the reach curve at zero) are equal, then the following Equation 4 is satisfied:

$$\int_y \max\left(0, f_j'(y) - f_j(y)\right) = \tfrac{1}{2}\int_y \left|f_j'(y) - f_j(y)\right| \qquad (4)$$

which is known as the statistical difference between $f_j'$ and $f_j$.

The event reassignment probability functions are defined by Equation 5:

$$g_j(z) = \frac{\max(0, f_j'(z) - f_j(z))}{D(f_j', f_j)} \qquad (5)$$

The reassignment of events can be performed as follows:

```
for each event type j
    for each unique identifier x
        if f_j(x) < fprime_j(x)
            continue
        for each event c of type j of unique identifier x
            with probability (f_j(x) – fprime_j(x)) / f_j(x)
                assign event c to a unique identifier z picked according to distribution
g_j(z)
```

The reassignment technique includes several lemmas:

Lemma 1: this technique makes the new assignment implement event attachment functions $\{f_j'\}$ and consequently, ADF *A'*. To prove this, the observation is made that each event is assigned to a unique identifier independently from other events. Now it must be proven that for each event type j, the probability of the assignment of the event to the unique identifier $f_j'$ is equal to $f_j'$. Two cases are considered:

$$(1) \; f_j'(x) > f_j(x)$$

and

$$(2) \; f_j'(x) \le f_j(x).$$

In case (1):

$$P(C'(c) = x) =$$
$$P(C'(c) = x \mid C(c) = C'(c)) \cdot P(C(c) = C'(c)) + P(C'(c)$$
$$= x \mid C(c) \ne C'(c)) \cdot P(C(c) \ne C'(c)) = f_j(x) + g_j(x) \cdot D(f_j', f_j) = f_j'(x).$$

In case (2):

$$P(C'(c) = x) = P(C(c) = C'(c)|C(c) = x) \cdot P(C(c) = x) = \frac{f_j'(x)}{f_j(x)} \cdot f_j(x) = f_j'(x).$$

**QED**

Lemma 2: the expected number of events of type *j* that this technique reassigns is equal to Equation 6:

$$\sum_{j \in eventTypes} \sum_{x \in P} |C_j| \cdot f_j(x) \cdot \max\left(0, \frac{f_j(x) - f_j'(x)}{f_j(x)}\right) =$$
$$\sum_{x \in P} \sum_{j \in eventTypes} |C_j| \cdot \max\left(0, f_j(x) - \tilde{f}_j(a(x))\right) \qquad (6)$$

To prove this:
Given an event *c* of type *j* and a unique identifier *x*, an event *c* will be reassigned from unique identifier *x* to another unique identifier if (a) the event falls onto unique identifier *x* in *C*, and (b) the event gets reassigned from person *x* by the technique. The probability of (a) is equal to $f_j(x)$, and the probability of (b) is represented by Equation 7:

$$\max\left(0, \frac{f_j(x) - f_j'(x)}{f_j(x)}\right) \qquad (7)$$

The required expression is obtained by the linearity of expectation.

**QED**

Thus, for each person $f_j'$, the penalty for mapping $f_j'$ to $f_j'$ is equal to Equation 8:

$$\sum_{x \in P} \sum_{j \in eventTypes} |C_j| \cdot \max\left(0, f_j(x) - \tilde{f}_j(a(x))\right) \qquad (8)$$

Lemma 3: the technique makes the new assignment implement $\{f_j'\}$ by reassigning the minimal number of events.
As proof, any unique identifier whose assigned event is reassigned is not assigned any new events by the technique.
Thus, any technique that randomly reassigns fewer events would leave some unique identifier with too many events.

**QED**

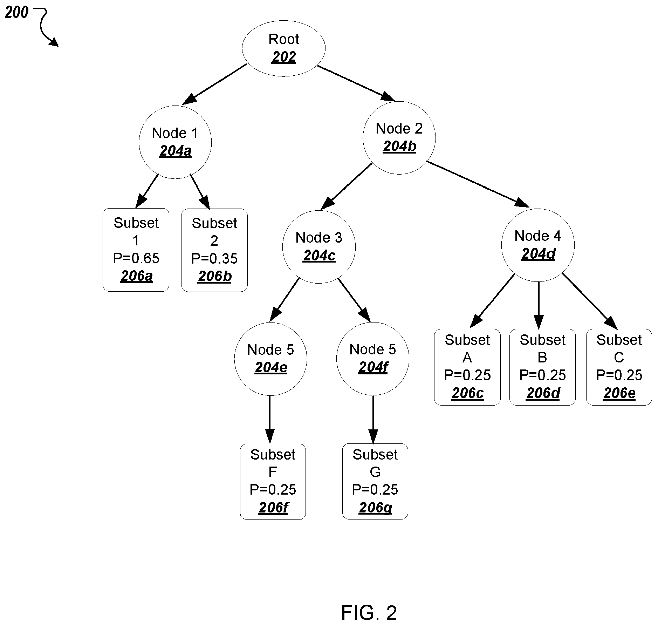

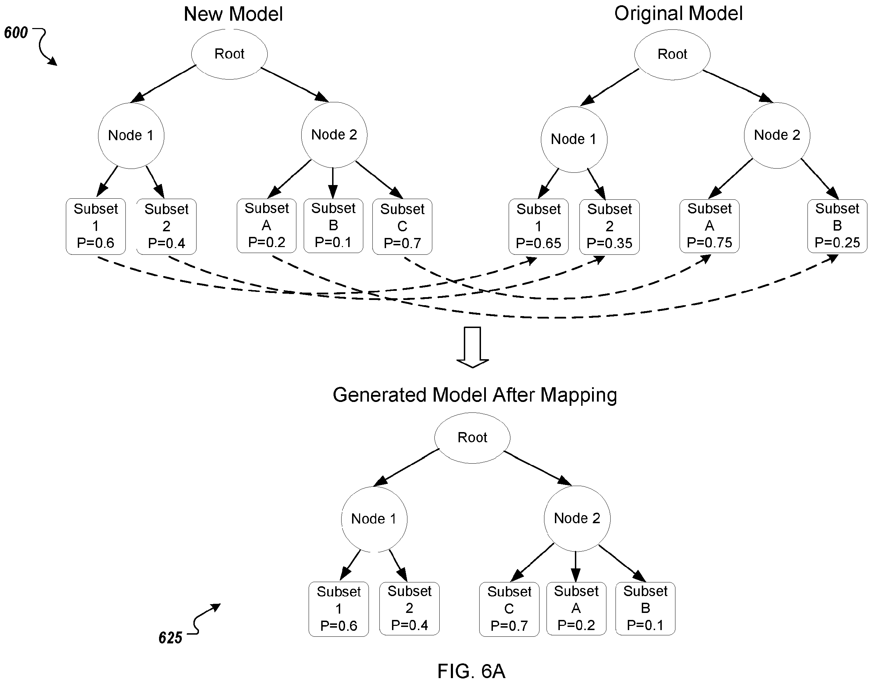

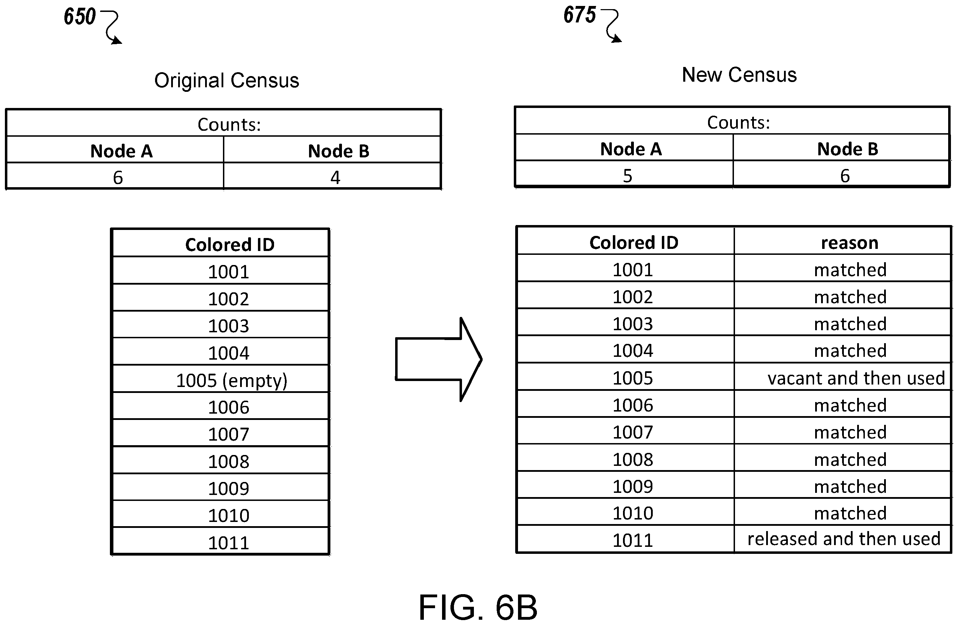

In light of Lemma 2 in Step (1), a map $a: P \rightarrow P'$ that minimizes Equation 8 is needed. This problem can be reduced to a graph matching problem, described in further detail below, by introducing an edge between any $x \in$ P, $x'$ $\in P'$ of weight equal to Equation 8.
Naively, it would lead to a quadratic number of edges. A natural simple heuristic would be to go over $x \in P$ in a random order and match $x$ to $x' \in P$, which is closes to $x$ in terms of L1 distance metrics. In some implementations, clusters of unique identifiers of a predetermined size can be introduced, and assuming that event attachment probability functions $f, f'$ are constants within the clusters substantially reduces the size of the matching problem and has a negligible impact on model accuracy.
The decision tree model produces an output that can represent an assignment of a resource, an assignment of a uniquely identified resource to a population based on statistical distributions, etc. For example, the decision tree model can output a particular set of data to be allocated to an input memory location. Updates to the model, such as a new version of the model that has different statistical properties from the original version of the model, can be provided. The updates can provide improvements to the accuracy of the model, but unnecessary reallocations of data that result in the same statistical distribution of the uniquely identified resource result in wasted resources and excessive computing time.
The system can identify, from the allocations made by the original model (assignments to pools based on statistical distributions) and the allocations made by the new model, mappings between the original model and the new model. The improved model implementation technique reuses as many population pools of the original model in the new model as possible, such that the population pool subsets in the new model don't break consistent hashing, as described in further detail below with respect to FIGS. 2, 6A, and 6B, from the original model. In other words, the improved technique ensures that the same event is mapped to the same unique identifier in both the original model and the new model.
The system matches models by finding models with same name and asserting that the random seeds for each node of the models are the same. The system then renames population pool subsets in the new model with population pool subset names in the original model. The original model population pool subsets are "shadow populations," and in some implementations, if the shadow population is too small, the new model population includes population from an unused population pool. In other implementations, if the shadow population includes population from a portion of an existing population pool subset in the original model, the new model population can include a split portion of the original population pool subset. If the shadow population includes population from a portion of at least two existing population pool subsets in the original model, the new model population can include a merged portion of the original population pool subsets.
The system allocates as many population pools in new models as possible such that the population in the new model doesn't break the consistent hashing from the old models. By meeting these constraints, the same event data is mapped to the same unique identifier in the original model and the new model.
Note that the techniques described in this document can be implemented with other types of models for different applications, such as allocating computing resources. For brevity, much of the description that follows will be within the context of estimating the user population reach statistics of particular digital content.

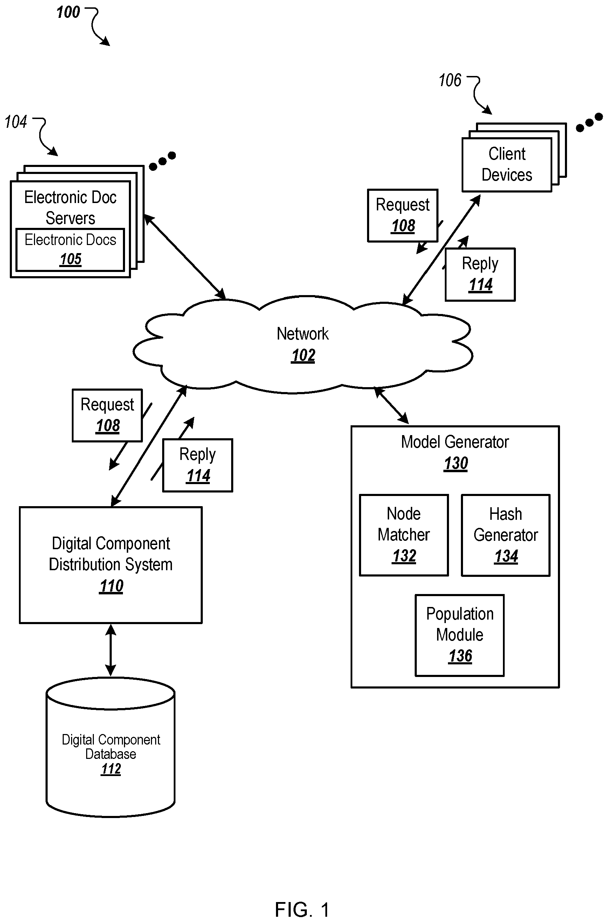

FIG. 1 is a block diagram of an example environment 100 in which a statistical model can be developed. The example environment 100 includes a network 102, such as a local area network (LAN), a wide area network (WAN), the Internet, or a combination thereof. The network 102 connects electronic document servers 104 ("Electronic Doc Servers"), client devices 106, and a digital component distribution system 110 (also referred to as DCDS 110). The example environment 100 may include many different electronic document servers 104 and client devices 106.

A client device 106 is an electronic device that is capable of requesting and receiving resources (e.g., electronic documents) over the network 102. Example client devices 106 include personal computers, mobile communication devices, and other devices that can send and receive data over the network 102. A client device 106 typically includes a user application, such as a web browser, to facilitate the sending and receiving of data over the network 102, but native applications executed by the client device 106 can also facilitate the sending and receiving of data over the network 102.

An electronic document is data that presents a set of content at a client device 106. Examples of electronic documents include webpages, word processing documents, portable document format (PDF) documents, images, videos, search results pages, and feed sources. Native applications (e.g., "apps"), such as applications installed on mobile, tablet, or desktop computing devices are also examples of electronic documents. Electronic documents 105 ("Electronic Docs") can be provided to client devices 106 by electronic document servers 104. For example, the electronic document servers 104 can include servers that host publisher websites. In this example, the client device 106 can initiate a request for a given publisher webpage, and the electronic document server 104 that hosts the given publisher webpage can respond to the request by sending machine Hyper-Text Markup Language (HTML) code that initiates presentation of the given webpage at the client device 106.

Electronic documents can include a variety of content. For example, an electronic document 105 can include static content (e.g., text or other specified content) that is within the electronic document itself and/or does not change over time. Electronic documents can also include dynamic content that may change over time or on a per-request basis. For example, a publisher of a given electronic document can maintain a data source that is used to populate portions of the electronic document. In this example, the given electronic document can include a tag or script that causes the client device 106 to request content from the data source when the given electronic document is processed (e.g., rendered or executed) by a client device 106. The client device 106 integrates the content obtained from the data source into a presentation of the given electronic document to create a composite electronic document including the content obtained from the data source.

In some situations, a given electronic document can include a digital content tag or digital content script that references the DCDS 110. In these situations, the digital content tag or digital content script is executed by the client device 106 when the given electronic document is processed by the client device 106. Execution of the digital content tag or digital content script configures the client device 106 to generate a request 108 for digital content, which is transmitted over the network 102 to the DCDS 110. For example, the digital content tag or digital content script can enable the client device 106 to generate packetized data request including a header and payload data. The request 108 can include data such as a name (or network location) of a server from which the digital content is being requested, a name (or network location) of the requesting device (e.g., the client device 106), and/or information that the DCDS 110 can use to select digital content provided in response to the request. The request 108 is transmitted, by the client device 106, over the network 102 (e.g., a telecommunications network) to a server of the DCDS 110.

The request 108 can include data specifying the electronic document and characteristics of locations at which digital content can be presented. For example, data specifying a reference (e.g., URL) to an electronic document (e.g., webpage) in which the digital content will be presented, available locations (e.g., digital content slots) of the electronic documents that are available to present digital content, sizes of the available locations, positions of the available locations within a presentation of the electronic document, and/or media types that are eligible for presentation in the locations can be provided to the DCDS 110. Similarly, data specifying keywords designated for the selection of the electronic document ("document keywords") or entities (e.g., people, places, or things) that are referenced by the electronic document can also be included in the request 108 (e.g., as payload data) and provided to the DCDS 110 to facilitate identification of digital content items that are eligible for presentation with the electronic document.

Requests 108 can also include data related to other information, such as information that the user has provided, geographic information indicating a state or region from which the request was submitted, or other information that provides context for the environment in which the digital content will be displayed (e.g., a type of device at which the digital content will be displayed, such as a mobile device or tablet device). Data specifying characteristics of the client device 106 can also be provided in the request 108, such as information that identifies a model of the client device 106, a configuration of the client device 106, or a size (e.g., physical size or resolution) of an electronic display (e.g., touchscreen or desktop monitor) on which the electronic document is presented. Requests 108 can be transmitted, for example, over a packetized network, and the requests 108 themselves can be formatted as packetized data having a header and payload data. The header can specify a destination of the packet and the payload data can include any of the information discussed above.

The DCDS 110 selects digital content that will be presented with the given electronic document in response to receiving the request 108 and/or using information included in the request 108. In some implementations, the DCDS 110 is implemented in a distributed computing system (or environment) that includes, for example, a server and a set of multiple computing devices that are interconnected and identify and distribute digital content in response to requests 108. The set of multiple computing devices operate together to identify a set of digital content that is eligible to be presented in the electronic document from among a corpus of millions of available digital content. The millions of available digital content can be indexed, for example, in a digital component database 112. Each digital content index entry can reference the corresponding digital content and/or include distribution parameters (e.g., selection criteria) that condition the distribution of the corresponding digital content.

The identification of the eligible digital content can be segmented into multiple tasks that are then assigned among computing devices within the set of multiple computing devices. For example, different computing devices in the set of multiple computing devices 114 can each analyze a different portion of the digital component database 112 to identify various digital content having distribution parameters that match information included in the request 108.

The DCDS 110 aggregates the results received from the set of multiple computing devices and uses information associated with the aggregated results to select one or more instances of digital content that will be provided in response to the request 108. In turn, the DCDS 110 can generate and transmit, over the network 102, reply data 114 (e.g., digital data representing a reply) that enable the client device 106 to integrate the select set of digital content into the given electronic document, such that the selected set of digital content and the content of the electronic document are presented together at a display of the client device 106.

When digital content (or other content) is distributed to client devices 106, the distribution of the digital content can be tracked. In some implementations, cookies are used to track the distribution of the digital content. For example, the digital content distribution system can access (or otherwise obtain) information from a cookie that is stored at the user device, and the information from the cookie with information specifying the digital content that was distributed.

However, challenges can arise when using cookies to track distribution of digital content and predict, for example, populations and characteristics of the users represented by the cookies. For example, when a same user uses multiple different user devices to access content, each of those different devices will store a different cookie, such that it is difficult to determine that the same user is accessing content from each of the different devices. Further, multiple different users may use the same device (i.e., a single user device) to access content. In this situation, it is difficult to determine which of the users is accessing content with that device at any given time. In another example, when statistical models are used to assign users from a population having particular characteristics to a particular cookie and an update to the model or a new model is used, it is possible for the user assigned to the cookie to be double counted as part of one population by the original model, and part of another population by the updated, or new, model. As can be appreciated, these challenges make it difficult to determine a number of members of a population having particular characteristics.

The techniques described below enable multiple cookie counts to be converted to unique individual counts, also referred to as people counts using an Activity Density Function (ADF), which describes the probability of a person generating cookies of each type. ADFs can be related to matching cross-device reach functions. Furthermore, ADFs can be approximated by a mixture of Dirac delta functions and estimated empirically using panel data in which audience counts are determined and corrected based on actual cookie counts and information for unique users.

A model generator 130 applies, updates, and creates analytical models using data collected from the digital content distribution process. For example, model generator 130 can receive request data 108 and reply data 114 to create a model that predicts the population and characteristics of users represented by cookies indicated in request data 108 and reply data 114. Models produced by model generator 130 can receive input data, such as a cookie or other anonymized identifier, and provide output data that indicates a unique user from a population having particular characteristics, such as the user's demographics. Model generator 130 makes updates to models based on received information, such as request 108 and reply 114. Model generator 130 and its model outputs are described in further detail with respect to FIGS. 2-7.

Model generator 130 includes a node matcher 132 that identifies and matches nodes of models. For example, node matcher 132 can match nodes between versions of a particular model to facilitate hashing and provide consistency between outputs of the version of the particular model. Node matcher 132 and exemplary node matching techniques are described below with respect to FIG. 2.

Model generator 130 includes a hash generator 134 that performs hashing techniques to map models to each other. For example, hash generator 134 can apply hashing between an original model and an update to, or a new version of, the model, etc. Hash generator 134 and exemplary hashing techniques are described below with respect to FIG. 6.

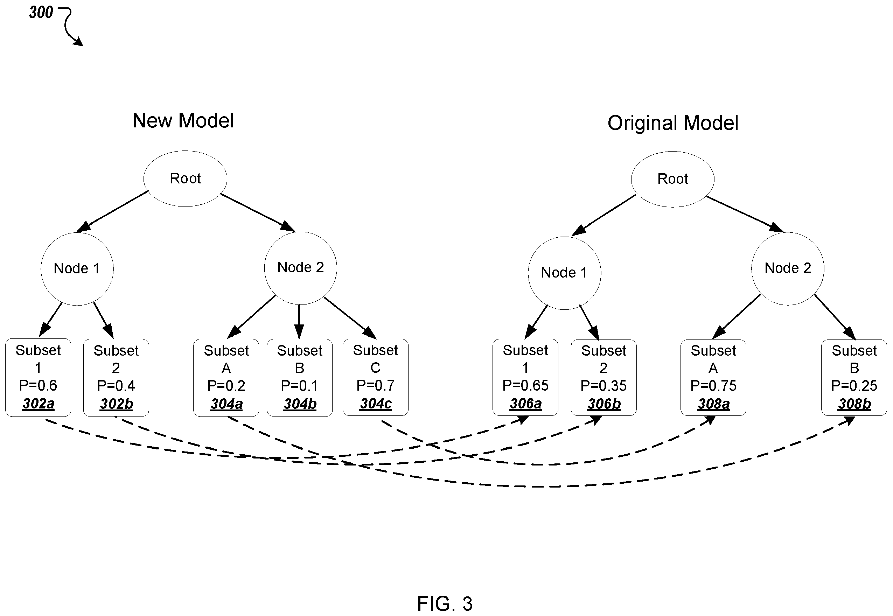

Model generator 130 includes a population module 136 that performs operations on populations assigned to particular nodes of a model. For example, population module 136 can reassign, split, or merge populations of a node. Population module 136 can perform other operations on node populations, such as identify and match the populations. Population module 136 and exemplary population operations are described below with respect to FIGS. 3A, 3B, 4, and 5.

As discussed in more detail below, the techniques discussed in this document allow for more accurate predictions of demographics to which users belong by applying consistent hashing between an original model and an updated, or new, model to generate a third model that retains the statistical properties of the new model while minimizing differences from the original model. This system reduces the number of reassignments of an anonymized identifier, such as a cookie, to a particular population, thereby reducing the resources needed to perform the reassignments. The model receives input of an identifier indicating data, and can output a particular location in memory to which the data is assigned to be allocated. The particular location in memory can belong to a section of memory having particular characteristics (e.g., a particular access speed, a capacity, whether the memory is connected to main memory). Once the data is assigned to a particular location in memory, if an update to the model results in the same data being assigned to a different location in memory, additional resources are needed to perform the reallocation. Additionally, if the model is attempting to estimate the number of allocations within a particular location in memory for management purposes, the model may not have an accurate estimation if the same data identifier was allocated to one location under the original model and allocated to a second location under an updated, or new, model. If the data identifier is counted as assigned to both locations in memory, overcounting occurs. Memory management decisions made based on the overcounted assignments can result in inefficient allocations and operations.

The techniques described below minimize overcounting by applying hashing between an original model and an updated, or new, model. A particular node path through the model indicates a particular set of characteristics of the population from which a unique person identifier, data identifier, etc. is selected and to which the input identifier is assigned. Matching and mapping the nodes of the original model to the updated, or new, model allows an identifier to be consistently assigned to the same node population through assignment to a unique member of the population. For example, the system can apply consistent, weighted consistent, jump hashing, or various other hashing techniques.

The discussion that follows begins with a description of how population counts are estimated using model assignments, including a description of a decision tree model and how characteristics of a population pool of a node are indicated by the path taken to the node. A node matching discussion follows, which explains how nodes are matched between models. A pool matching and splitting discussion introduces techniques for assigning populations to an updated, or new, model that uses a pool of a different size than pools of the original model. A pool matching and merging discussion presents techniques for assigning populations to an updated, or new, model that uses a pool that includes populations from multiple pools of the original model. An identifier reassignment discussion presents techniques for reassigning identifiers according to an updated model with different node populations and allocation statistics. Finally, a new model generation discussion introduces hashing techniques and presents techniques for generating a third model from an original model and an updated, or new, model that retains the statistical properties of the updated model and minimizes differences from the original model.

Further to the descriptions above, a user may be provided with controls allowing the user to make an election as to both if and when systems, programs or features described herein may enable collection of user information (e.g., information about a user's social network, social actions or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

**Decision Tree Models**

FIG. 2 shows an example model 200 for predicting a population having particular characteristics to which an identifier belongs. The following description is directed to a decision tree model. The model can take input event data, such as a cookie or other identifier, as input and output a unique identifier, such as a virtual person identifier (VPID) that belongs to a population having particular characteristics, a data identifier for a particular set of data, etc. The event data comes in to the root 202 of the tree model and goes through the tree until hitting a leaf node, such as nodes 204a, 204d, 204e, or 204f.

The node path through the decision tree model indicates the particular characteristics of the population. Leaf nodes of the decision tree model can indicate a population pool, such as pool subsets 206a, 206b, 206c, 206d, 206e, 206f, and 206g, from which the unique identifier is selected to be assigned to the event data. Parent nodes, such as nodes 204b and 204c can indicate a particular characteristic of the population pool of the leaf node. Each parent node along the node path from the root node to the leaf node of the population pool determines a child node to which the event data is sent.

Along the node path, the event data is labelled with attributes. In some implementations, one or more of the parent nodes along the node path can indicate a particular characteristic with which to label the event data. Leaf nodes can also indicate a particular characteristic with which to label the event data. For example, leaf node 204a can indicate that its population is left-handed, whereas parent node 204b indicates that its population is right-handed. In this example, parent node 204c can indicate that its population is right-handed and prefers to commute by public transportation, whereas leaf node 204d can indicate that its population is right-handed and prefers a driving commute. Leaf node 204e can indicate that its population is right-handed, prefers to commute by public transportation, and takes the subway, while leaf node 204f can indicate that its population is right-handed, prefers to commute by public transportation, and takes the ferry.

At each leaf node, the event data is labelled with a unique identifier selected from the population pool of the leaf node. Only leaf nodes of the tree model have a population pool from which to choose a unique identifier, and the terms population node and leaf node may be used interchangeably in the following description. In some implementations, the nodes are ADF nodes that describes the probability of a particular user, event, set of data, etc., generating event data of each type. In other implementations, the nodes can, for example, be non-ADF nodes that do not indicate an activity density.

When an updated, or new, model predicting a population to which an identifier belongs is released, it may output a different VPID than the original model, and when a third party counts unique VPIDs across a period of time, such as a model update release (i.e., counting VPIDs generated by both the original model and the updated model), they will over count the number of unique people within a population having a particular set of characteristics, and have less accurate statistics and reports.

At a high level, the system takes two models as input: an original model and an updated, or new, model with statistical characteristics different from the original model. The system then outputs a third model that has the same statistical characteristics as the updated model, and minimizes the differences in output VPID from the original model.

Two decision tree models are mathematically equivalent if they produce the same output by taking the same decision path. Two models are statistically equivalent if they generate the same aggregate level results from the same set of inputs as the size of the set approaches infinity. The system generates and outputs a third model that minimizes the differences between the original model and the new model by building the third model to be statistically equivalent to the new model, and as close to mathematically equivalent to the original model as possible. Generally, in order for the third model to be statistically equivalent to the new model and mathematically close to the original model, the original model and the new model are structurally similar.

The system generates the third model such that it is statistically equivalent to the updated model and as close to mathematically equivalent to the original model as possible. By generating the third model with these characteristics, the system reduces unnecessary reassignment or reallocation of an identifier to different population pools to prevent wasting resources.

The system generates the third model utilizing two steps: setting up population pools of the third model, and performing node by node adjustment. With respect to the first step, a feature of the model generation process is reusing the population for any population node common to both the original model and the updated model. By reusing populations, the third model will label the same event data with the same VPID as much as possible. The system begins population pool setup by identifying leaf node correspondence between the original model and the updated model. With respect to the second step, the model generation process minimizes differences between the third model and the original model while retaining the aggregated statistical properties of the updated model.

The following description explains how to minimize event data switching within the model infrastructure. The system minimizes the impact of model parameter changes (R coefficient, C coefficient, kappas of reach curves, population pool sizes). In order to minimize the disruptiveness of model releases, the system optimizes two aspects of the new model: (1) constructing event data attachment probability function from ADF for the new model should be minimizing the difference between the original model and the new model, and (2) when assigning event data to unique identifiers according to the new probability function, the system minimizes the number of event data that are re-assigned.

The system minimizes differences between the original model and the new model by mapping nodes of the new model to the nodes of the original model. In the simplest scenario when the model generator 130 updates the model to change only the R and C coefficients and sizes of the delta pools, the matching is already done. Next, the system renames the subsets of the new model to match the subsets of the original model.

The system minimizes the number of event data that are reassigned by applying hashing between the nodes of the new model and the nodes of the original model. For example, hash generator 134 of the model generator 130 can apply consistent hashing between the nodes of the new model and the nodes of the original model. In some implementations, the system can apply other hashing techniques, such as affinity hashing, in which each available subset option has an affinity toward each event data and the options bid to win event data from each other. In literature, affinity hashing is known as rendezvous hashing, or weighted consistent hashing with affinity ranking.

### Hashing Techniques

Consistent Hashing

Consistent hashing is applied to achieve assigning events to unique identifiers according to a new event assignment function and minimize the number of events that are reassigned to different unique identifiers between a new model and the original model.

The order of subsets in a population should be preserved as much as possible in order to optimize consistent hashing.

Sharding Functions

In some implementations, a node that selects a subset, or bin, of values from which an output value is selected can utilize a sharding function. A sharding function, in its simplest form, maps a key K to one of a set of integers [0 ... $N$ - 1] and provides a subset, bin, or bucket, associated with the key. Shards are horizontal partitions of data; each shard is stored and processed separately, reducing index size and computational time and resources required-sharding facilitates load balancing. Key formats used by sharding functions include (1) a variable-length byte sequence, interpreted as a string with a lexicographic ordering (referred to as KS), (2) a fixed-length byte sequence interpreted as a fixed precision number in the range [0 ... 1) (referred to as KF), or (3) a fixed-length byte sequence interpreted as an unsigned integer (referred to as KU). If the keys used by the application are not already hashes, they are hashed, or fingerprinted, before sharding to give a uniform distribution.

Common sharding functions include:

- Mod sharding: $shard(KU, N) = KU \% N$
- Division sharding: $shard(KF, N) = floor(KF * N)$, or equivalently

$$shard(KU) = \frac{KU * N}{KU_{max} + 1}$$

- Range sharding: $shard(K, N, splits) = i$ such that $splits[i] \leq K$ && $K < splits[i + 1]$, where $splits$ is a sorted array of breakpoints. Range sharding applies to all key formats with a total ordering.
- Explicit assignment: $shard(K, N) = explicitShardIndex[K]$. Explicit assignment is mentioned for completeness: it is not a consistent hash, but is often used as an expensive but ultimately flexible alternative to other common sharding functions.

Mod sharding and division sharding create equal-sized shards. In contrast, range sharding allows arbitrary shard sizes by picking appropriate split points. If the number of shards changes, mod sharding usually reassigns the majority of data items to a different shard and with some variation with $GCD(M, N) \neq 1$. If the number of shards changes by a small ratio, then division sharding moves a smaller fraction of low-numbered shards, but relocates the majority of data in high-numbered shards. Going from $N$ to $N + 1$ shards relocates the minimum 50% of the data; other changes relocate more.

Range sharding allows some changes with minimal relocation: shards may be split or merged if the shards are adjacent. This flexibility is limited by the one-dimensional adjacency relationship among shards, and arbitrary changes in shard weighting or shard count may cause relocation far in excess of that needed to achieve the new weights. If disjoint ranges are permitted (multiple intervals mapping to the same shard), then more flexibility is gained at the cost of fragmentation to the split array; some compromise must be made between relocation cost and exponential growth of the split array.

In some implementations, a variant of mod sharding which supports ideal incremental resharding is iterative. To shard a key into one of N shards, for each number of shards $x$ from $N$ down to 1, if $hash(x, key) \% x == 0$, then stop and return $x$ - 1. This process can require up to $N$ hashing iterations to compute the shard.

Uniform Affinity Ranking

An insight of affinity ranked hashing is to expand a one-dimensional keyspace into a many-dimensional keyspace. The added degrees of freedom permit flexible incremental adjustments to the subspaces assigned to shards. Given a key $K$ and a hashing function $H$, we generate a set of affinity scores $AF[i] = H(K, i)$ for $i$ in [0 ... $N$ - 1]. $K$ is then assigned to the shard $i$ with a maximum $AF[i]$: $shard(K, N) = argmax\{i\}H(K, i)$.

Like mod and division sharding, this affinity ranking shard function produces uniform shard sizes. Unlike mode and division sharding, it is ideally incremental: resharding from $N$ shards to $M$ shards only moves data into or out of the shards which are newly created or destroyed.

The hash function implicitly defines, per key, an affinity ranking of all possible shards. Given a subset of shards which exist, the key is assigned to the shard which is ranked highest. A key only moves shards when a higher-ranked shard comes into being, or when the shard it is currently in ceases to exist.

There's no need for the shard identifiers to be contiguous, or even integers, in this scheme. Any valid input to the hash function can be used. As an example, datacenter names would be natural choice for a cluster-assignment application.

Weighted Affinity Ranking

Weights can be added to the affinity ranking in a fairly straightforward way. The core idea is to bias the affinity scores so that some shards win more often. To preserve ideal incremental resharding, a class of probability distribution that is closed under max is needed. Intuitively, this means that two shards can be replaced by a larger shared with the combined capacity without affecting any key's ranking among other shards.

There are two simple probability distributions which are closed under max:

- Negative exponential distribution, with support $X \leq 0$, inverse scale parameter $a$.

     *CDF*: $\exp(X * a)$
     *PDF*: $a * \exp(X * a)$

- Power-function distribution, with support $0 \leq Y \leq 1$, inverse scale parameter $a$.

     *CDF*: $Y^a$
     *PDF*: $a * Y^{a-1}$

These distributions are just transformed versions of each other, with $X = \ln(Y)$.

If $X1$ is drawn from a negative exponential distribution with inverse scale $a$, and $X2$ is drawn from a negative exponential distribution with inverse scale $b$, then $\max(X1, X2)$ is negative exponentially distributed with inverse scale $(a + b)$. Similarly, if $Y1$ is drawn from a power-function distribution with inverse scale $a$ and $Y2$ is drawn from a power-function distribution with inverse scale $b$, then $\max(Y1, Y2)$ is power-function distributed with inverse scale $(a + b)$.

Because the affinity scores are only used for ranking, the absolute values of $X$ or $Y$ don't matter: multiplying all scale parameters by a constant, or moving from the negative exponential interpretation to the power-function distribution or vice versa, doesn't change the ordering. Furthermore, the inverse scale parameter directly determines the proportion of data that is assigned to a shard.

To generate variates from a negative exponential distribution, we can start with uniformly distributed hash outputs in [0,1] and then take the natural logarithm and divide by the inverse scale: $AF_{\exp[i]} = \frac{\ln(H(K,i))}{S[i]}$ .

Equivalently, we could generate variates from the power-function distribution: $AF_{\text{pow}[i]} = \text{pow}\left(H(K, i), \frac{1}{S[i]}\right) = \exp(AF_{\exp[i]})$ . The approaches are equivalent, and both are suitable for floating-point arithmetic.

Affinity ranking extends trivially to the case where keys must be assigned to $K$ of $N$ shards: just choose the top $K$ shards ranked by $AF$, instead of the single maximum $AF$. Incremental resharding is particularly helpful in this case, as only those replicas of a key which need to relocate are moved.

Affinity Hashing

Affinity hashing is known more commonly as "rendezvous hashing" or "weighted consistent hashing with affinity ranking." In this form of hashing, each shard, subset, bin, bucket, etc., has an affinity towards each event, and shards bid to win events from each other. Its time complexity grows linearly with the number of options we are choosing from.

## Node Matching

FIG. 3 shows an example of a leaf node matching process 300. In some implementations, the model generator 130 and components that it includes can perform operations as illustrated in FIG. 3. For example, node matcher 132 of model generator 130 can perform the leaf node matching process described as follows. The leaf node matching process begins by building a graph consisting of leaf nodes from the original model and the new, or updated, model. The system connects nodes with the same name. If multiple nodes from the original model merges to form nodes in the new model, or if a node from the original model splits into multiple nodes in the new model, the nodes in the original model and the new model are also connected. The connected nodes are then identified.

Once all connected nodes are identified, the system scans through the connected components to collect unused population pools that were never used by any of the leaf nodes in the original model. The third model only chooses from these unused populations pools when necessary.

As described above, event data is input at the roots of the original model and the new model. The event data is then passed through the trees until it reaches one of the leaf nodes. For example, in FIG. 3, the event data would pass to one of leaf nodes Node 1 or Node 2 in the either the original model or the new model. Each of Node 1 and Node 2 in the original model and in the new model include several subsets of a population pool of the node: subsets 302a and 302b for Node 1 of the new model, subsets 304a, 304b, and 304c for Node 2 of the new model, subsets 306a and 306b for Node 1 of the original model, and subsets 308a and 308b for Node 2 of the original model. A key difference between the new model and the original model is the addition of a population subset under Node 2 in the new model, such that the new model has three population subsets under Node 2, while the original model has only two population subsets under Node 2.

In some implementations, node names in the original and new models are unique, and accurately express the function of the node and the characteristics of event data that would reach that particular node. In such situations, node matcher 132 can match nodes between the original model and the new model by pair nodes of the same name. This process is known as identity matching, and can be applied to models where each event data type dimension is represented by a single node. The identity matching technique allows a system process updates and new models that have different R and C coefficients and kappa curves from the original model.

In some implementations, node matcher 132 instead performs intra-pool subset matching, in which subsets are annotated with (1) the particular characteristics of the pools of the nodes, (2) an integer identifier of the subset, and (3) a name of the type of event data. The model generator 130 uses the subset identifiers to perform node matching with the node matcher 132. With this information, node matcher 132 can refrain from performing cumbersome analysis of the tree, and can easily extract a list of subsets with their activity vectors by pool. The model generator 130 then runs a minimization solver to get a map between old and new activity vectors. For example, the model generator 130 can use an L1 distance minimization solver or another type of minimization solver to map the old and new activity vectors. The intra-pool subset matching technique can be applied to models in which each subset is located in a dedicated node, and nodes do not share subsets. Additionally, intra-pool subset matching acts as identity matching on non-ADF nodes and does activity-based matching for subsets. Matching of subsets is done within subsets with identical sets of event attributes.

Once node matching is done, the nodes of the new model are renamed to the names of their original model counterparts.

The subset identifiers indicate that subset 302a of the new model maps to subset 306a of the original model and that subset 302b of the new model maps to subset 306b of the original model. With respect to Node 1, the subsets of the node pools match between the new model and the original model.

The subset identifiers indicate that subset 304a of the new model maps to subset 308a of the original model and that subset 304c of the new model maps to subset 308b of the original model. Because there is one more subset of the Node 2 population pool in the new model than there is in the original model, one subset will not correspond to a subset in the original model. The fact that one of the subsets in the Node 2 population pool in the new model does not correspond with a subset in the Node 2 population pool in the original model indicates that there is a subset that is either not part of the original model, a subset of a subset of the original model, or a combination of subsets of the original model.

## Population Pool Identification and Selection

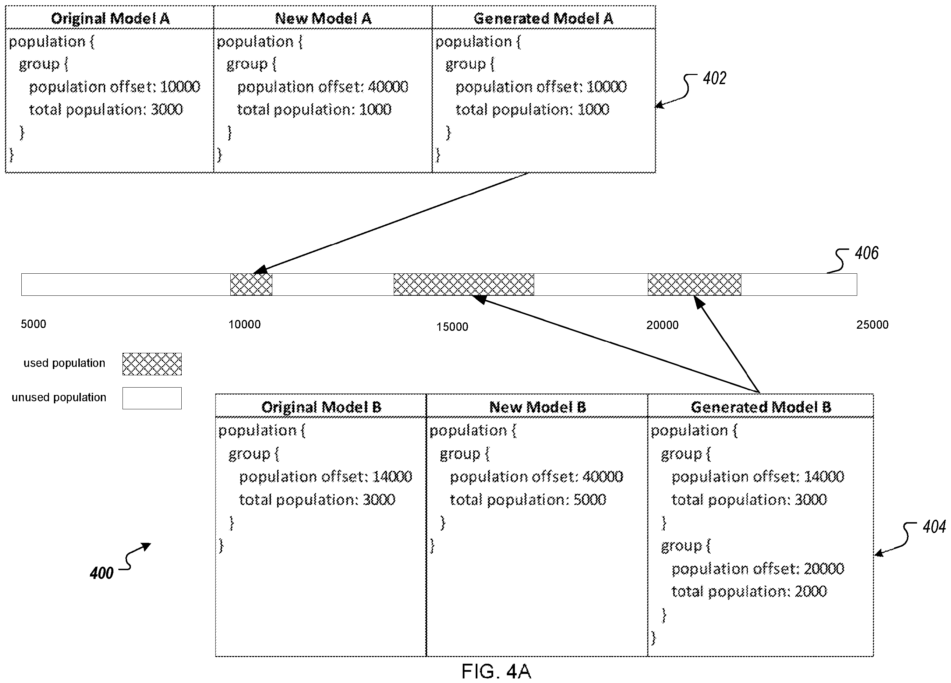

FIG. 4A shows a process 400 for identifying and selecting population pools for a third model generated from an original model and a new model. In some implementations, the model generator 130 and components that it includes can perform operations as illustrated in FIG. 4A. For example, population module 136 of model generator 130 can perform the population pool selection and determination process described as follows. Model summary 402 provides a summary of original model A, new model A, and generated model A, and model summary 404 provides a summary of original model B, new model B, and generated model B. Ordered population line 406 is an organized presentation of an available population. The ordered population line 406 acts as a population axis with both used and unused population intervals from models. Generated model A is generated from original model A and new model A, and generated model B is generated from original model B and new model B.

If the pools are selected from a linear ordering of resources (e.g., a numbered set of resources like a number line) then the order of the pools should be preserved as much as possible when creating the third model, otherwise consistent hashing will not work.

Model summary 402 shows that original model A's population includes a single subset, or group. Similarly, the populations of new model A and generated model A also include a single group. In this particular example, the population is a set of unique identifiers that indicate particular users. Original model A's group begins with identifier number 10000 (original model A's offset from 0 is 10000) and contains 3000 identifiers. New model A's group begins with identifier number 40000 (new model A's offset from 0 is 40000) and contains 1000 identifiers. Because model generator 130 ensures that the generated third model has the same statistical characteristics as the new model and minimizes the differences in output from the original model, generated model A has a total population pool of the same size as the new model, and uses a subset of original model A's group. Thus, generated model A uses the same offset—10000—from 0 as original model A, and contains 1000 identifiers. Generated model A has a different population size than original model A does-generated model A has fewer identifiers in its population, and thus does not use the entirety of original model A's population. In the system 100, when there are unused identifiers from the original model, they are returned to an unused population pool for other models to use. In this example, original model B, new model B, and generated model B share a population pool with original model A, new model A, and generated model A.

In some implementations, a special portion of an available population is set aside to be shared by multiple models with populations unmodeled in the original model.

By sharing the population pool of original model A from which the output is selected, generated model A minimizes its differences in output from original model A: a particular input will result in selecting output from the same population pools in both generated model A and original model A.

Model summary 404 shows that original model B's population includes a single group, as does new model B. In contrast, generated model B includes two groups. Original model B's group begins with identifier number 14000 (original model B's offset from 0 is 14000) and contains 3000 identifiers. New model B's group begins with identifier number 40000 (new model B's offset from 0 is 40000) and contains 5000 identifiers. Because model generator 130 ensures that the generated third model has the same statistical characteristics as the new model and minimizes the differences in output from the original model, generated model B has a total population pool of the same size as the new model, and uses as much of original model B's group as possible. However, new model B has a larger population pool size than original model B, and therefore generated model B needs additional identifiers. Thus, generated model B uses the same offset—10000—from 0 as original model B and contains all 3000 identifiers that original model B includes. Additionally, generated model B contains a second group containing 2000 identifiers; combined with the shared group from original model B that begins with identifier 10000 and contains 3000 identifiers, generated model B has a combined population pool of the same size as that of new model B. In this particular example, generated model B includes a second group with an offset from 0 of 20000 and includes 2000 identifiers. As explained above, an unused population pool exists across various sections of ordered population line 406, and generated model B uses 2000 identifiers from an unused portion of ordered population line 406 to bring its total population pool size to the same size as that of new model B.

By sharing as much of the population pool of original model B as possible, generated model B minimizes its differences in output from original model B. Because new model B has a larger population pool size than original model B, however, generated model B will also include a different portion of the available population pool than original model B.

Shared Population Pools and Population Pool Splitting

In some implementations, a new model shares a portion of a population pool used by the original model (i.e., portions of the available population pool used by the new model overlap with portions of the population pool used by the original model). When a node of the new model shares an entire node population pool with the original model, node matcher 132 identifies the node population pool as a match between the original model and the new model. When a node of the new model shares only a portion, or a subset, of a single node population pool used by the original model, node matcher 132 identifies the shared portion as a split portion of the node population pool of the original model. When a node of the new model shares a portion of multiple node population pools used by the original model, node matcher 132 identifies the shared portions within the node as a merged portion of the node population pool of the original model. In this particular example, new model A has a smaller population pool size than original model A and does not share any portion of a node population pool used by original model A (i.e., the portions of the available population pool used by new model A do not overlap with any portions of the population pool used by original model A). Nodes of a new model that do not share any portion of a node population pool used by the original model are identified by the node matcher 132 as having new node population pools.

Population Ordering Across Models

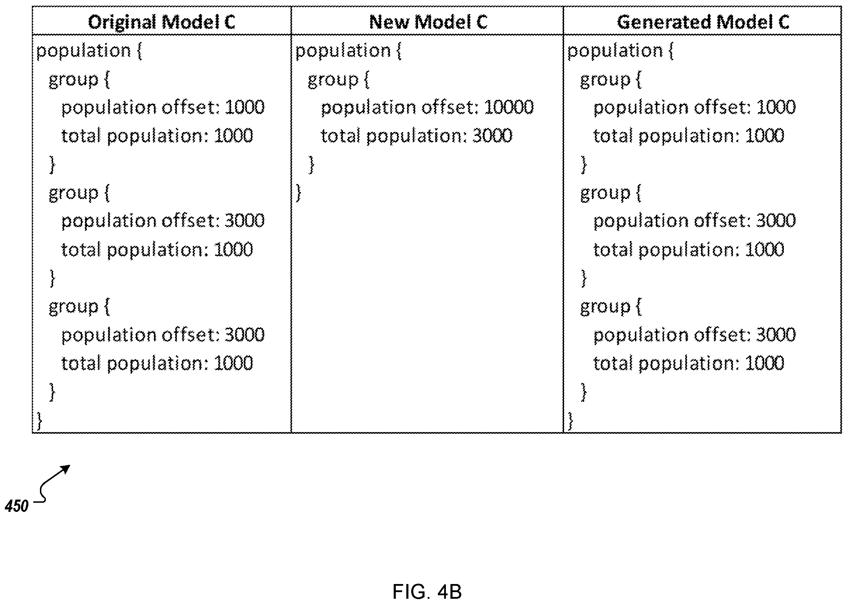

FIG. 4B illustrates an important constraint on the ordering of subsets when generating a third model from an original model and a new model. In some implementations, the model generator 130 and components that it includes can perform operations as illustrated in FIG. 4B. For example, population module 136 of model generator 130 can perform the population pool selection and determination process described as follows. Model summary 450 shows that original model C includes three subsets, or groups, and the offset of each group from 0 is different. The first group of original model C has an offset from 0 of 1000, and includes 1000 identifiers. The second group of original model C has an offset from 0 of 3000, and includes 1000 identifiers. The third group of original model C has an offset from 0 of 2000, and includes 1000 identifiers. The order in which original model C has selected the groups is not in numerical order; this ordering of groups within the population pool of original model C must be preserved within generated model C's population pool to minimize differences in output between generated model C and original model C.

Because the model generator 130 applies hashing between an original model and a new model to create a generated model that retains the statistical characteristics of the new model while minimizing differences in output between the generated model and the old model, the ordering of the subsets within a population pool are critical to maintain consistency with the mapping between the original model and the new model. For example, if hash generator 134 of the model generator 130 applies consistent hashing to an original model and a new model to create a third model, the order of the groups within the original model's population pool must be preserved within the third model's population pool to preserve consistent hashing. Details of various hashing techniques the model generator 130 can apply to models are provided below with respect to FIGS. 6A and 6B.

Each of original model C and new model C has a population pool size of 3000 identifiers. Therefore, generated model C has the same population pool size as new model C (i.e., a population pool size of 3000 identifiers) and reuses the groups of original model C (e.g., the first group with an offset from 0 of 1000, and 1000 identifiers, the second group of original model C with an offset from 0 of 3000, and 1000 identifiers, and the third group of original model C with an offset from 0 of 2000, and 1000 identifiers). Generated model C uses each of the groups of original model C for a total population pool size that is consistent with that of new model C, and preserves the ordering of the groups from original model C.

Shared Population Pools and Population Pool Merging

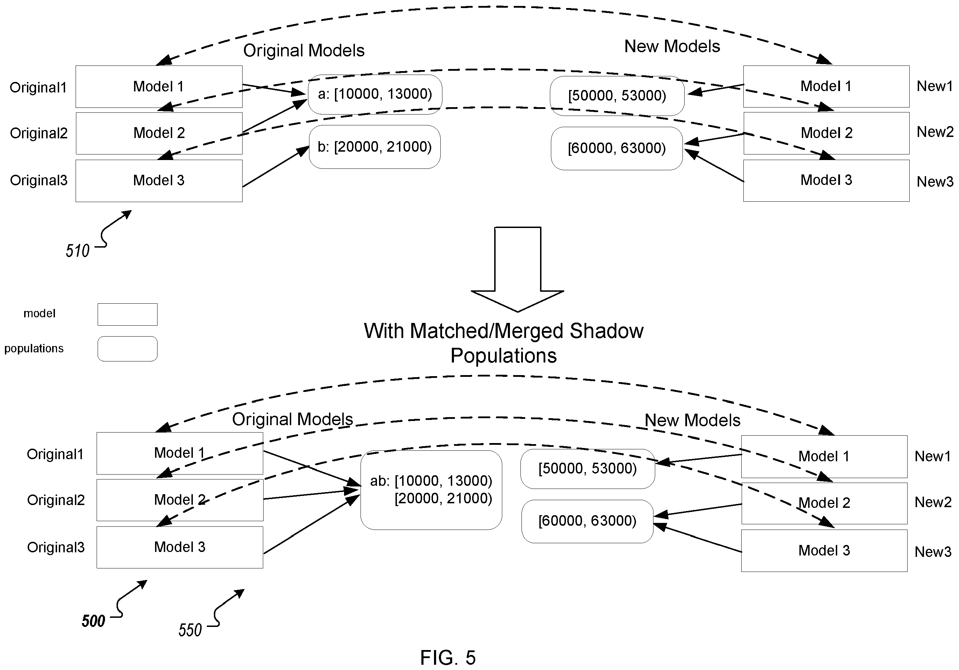

FIG. 5 shows a population matching and merging process 500 for matching and merging population pools of an original model and a new model. In some implementations, the model generator 130 and components that it includes can perform operations as illustrated in FIG. 5. For example, population module 136 of model generator 130 can perform the population pool matching and merging process described as follows. The model generator 130 can, for example, use population module 136 to match the models and populations, identify shadow populations, determine whether shadow populations need to be merged, determine whether shadow populations need to be split, etc. The model generator 130 optimally merges population pools such that aggregated statistics due to population rounding error is minimized.

Model set 510 illustrates a set of original models (Original 1, Original2, Original3) and a set of new models (New1, New2, New3) with a set of original model populations and a set of new model populations. In this particular example, Original 1 corresponds to New1, Original2 corresponds to New2, and Original3 corresponds to New3. The model generator 130 can match the models based on information such as a version or model number, a pointer, or other identifying information. In some implementations, where models do not change names between versions or updates, models are matched by finding a model from a set of original models with the same name as a model in a set of new models. By matching models, the serration is made that the random seeds of the original model and the new model are the same.

In this example, Original 1 and Original2 share population a, which begins with identifier 10000 and includes 3000 identifiers. Originals corresponds to population b, which begins with identifier 20000 and includes 1000 identifiers. New1 corresponds to a population that begins with identifier 50000 and includes 3000 identifiers. New2 and New3 share a population which begins with identifier 60000 and includes 3000 identifiers.

Populations in the old models are connected by extra edges via a new model connection to form a "shadow" population. These connected shadow populations assist with performing a population pool identification and assignment. The Original1 and New1 model pair uses shadow population a, because New1 corresponds to Original1, Original1 corresponds population a, and therefore New1 corresponds to shadow population a. The Original2 and New2 model pair uses shadow population a as well, because New2 corresponds to Original2, Original2 corresponds to population a, and therefore New2 corresponds to shadow population a. The Original3 and New3 model pair uses shadow population b, because New3 corresponds to Original3, Original3 corresponds to population b, and therefore New3 corresponds to shadow population b. Because New2 and New3 share the same population pool, New2 and New3 share the same shadow population-therefore, shadow population a and shadow population b should be merged to form a single shadow population. Model set 550 illustrates the set of populations once the shadow populations have been merged. Original1, Original2, and Original3 corresponds to merged population ab, and each of New1, New2, and New3 share shadow population ab.

Population Reordering Across Models

When the model generator 130 applies consistent hashing, the ordering of subsets is important. However, in some implementations, population subsets are reordered and the ordering across models cannot be preserved. For example, when two population pools are merged to form a new shadow population, populations and/or population subsets are reordered. In another example, when at least one shadow is shared by multiple models with different populations, populations and/or population subsets are reordered. In each of these examples, population sharing between models-and the resulting population subset reordering-can prevent further population fragmentation by facilitating merging with, for example, adjacent subsets.

**Generating a Third Model from an Original Model and a New Model**

FIG. 6A illustrates a mapping process of a new model to the original model to reduce reallocations of an input to various outputs. In some implementations, the model generator 130 and components that it includes can perform operations as illustrated in FIG. 6A. For example, node matcher 132, hash generator 134, and population module 136 of model generator 130 can perform the mapping process described as follows. The models can, for example, receive input of a particular set of data and output a particular location in memory having particular attributes. By reducing reallocations (e.g., inputting the same data and receiving a different output location in memory) system 100 reduces an amount of computing resources required to manage data within the memory. For example, by consistently assigning the same set of data to the same location in data, the system reduces the number of clock cycles used to reallocate the data. Additionally, the system reduces inaccuracies in aggregate-level statistics of the memory allocations-the system prevents overcounting of the amount of data in sectors of memory by optimizing a third model to minimize differences in output allocations between the new model and the original model while retaining the statistical properties of the new model.

As explained above, the steps of building a rollable model with minimal differences in output from an original model and the same statistical properties as a new model, is to take original model and new model, and update the new model to make a third model. The model generator 130 can perform this process utilizing three steps: (1) rename leaf nodes of the new model to match those of the old model, as described in detail above, (2) inform the new model of the probabilities of choices of the old model, (3) align the space of unique identifiers with the old model. Once this process is complete, the system can perform a validation procedure.

Node-by-node Adjustment

The system performs node-by-node adjustments to optimize the third model utilizing two approaches based on the functionality of the node. Whether the node is a population node-a leaf node having a population pool from which to select an output-is the functionality attribute that determines which of the two approaches the system applies.

If the node is not a population node, the node operates by selecting a subset, or bin, that contains output values from a set of bins "pseudo randomly." In this context, "pseudo randomly" means that a deterministic hash of the input value is treated as a random variable, and is equivalent to feeding the input value as a seed to a random number generator and using the output of the random number generator to select a bin. Each bin has a fixed, non-negative chance of being selected-this chance is the "weight" given to the bin. Each bin is associated with a unique child node of the non-population node, and the selected bin indicates to which of the non-population node's child nodes the system 100 should advance. In some implementations, the number of bins is less than a threshold number of bins, e.g., 100 bins, and no actual node adjustment is needed.

The system applies weighted consistent hashing with affinity ranking, or "affinity hashing" at run time to each of the non-population nodes of the original model and the new model. As an example, in the original model, a non-population node can have $n$ bins with weights $w_1$, $w_2$, ..., $w_n$, which sum to 1, and in the new model, a non-population node also has $n$ bins with weights $u_1$, $u_2$, ..., $u_n$, which also sum up to 1. In some implementations, the number of bins changes between nodes, and the system can add bins with zero-weights to the node with fewer bins to make the two nodes have the same number of bins. The affinity hashing technique guarantees that for each $i$ between 1 and $n$ inclusive, the proportion of events that fill into the $i^{th}$ bin in both models is $\min(w_i, u_i)$, which is optimal for minimizing differences in output between the original model and the new model. Affinity hashing is described in further detail below.

In contrast, conventional methods include applying techniques such as naive hashing, in which the system pseudo randomly generates a variable $x$ with a value between 0 and 1 uniformly and selects the first bin if $x$ is between

0 and $w_1$, the second bin if $x$ is between $w_1$ and $w_1 + w_2$, the third bin if $x$ is between $w_1 + w_2$ and $w_1 + w_2 + w_3$, etc. These conventional methods can provide a worse proportion of events that are treated consistently.

For example, if there are three bins in the original model with weights [0.1, 0.2, 0.7] and in the new model [0.4, 0.1, 0.5], with affinity hashing, the proportion of events treated consistently by the two models is min(0.1, 0.4) + min(0.2, 0.1) + min(0.7, 0.5) = 0.7. However, if a conventional method, such as naive hashing is applied, the proportion becomes 0.1 + 0 + 0.5 = 0.6. In this particular example, naive hashing provides a worse proportion of events that are treated consistently, and never simultaneously selects a second bin for any input.

If the node is a population node, the node operations by selecting an output value from a population pool pseudo randomly, where each output value has the same chance of being selected. First, the population pools from which the population node selects its output are selected as described above with respect to FIGS. 4A, 4B, and 5. The system reuses population pools from the original model nodes as much as possible in the new model nodes, and only uses unused population pools when necessary.

Jump Hashing

In order for jump hashing to consistently select an output value, the population pools from the original model nodes and the new model nodes should align as much as possible from the beginning. Hash generator 134 of model generator 130 applies jump hashing to select a unique identifier from a population of the node, because the renaming process adds and removes unique identifiers to/from the end of the list.

At run time when assigning an output value from a given set of population pools, the system applies jump hashing to select an output value pseudo randomly from the population pools such that each output value has an equal chance of being selected. The jump hashing technique is described in further detail below. Given n output values, jump hashing beings with output value 1, and in each step, jumps forward with expected step size 1, 2, 4, 8, ... until its next jump goes beyond output value $n$. At this point, the output value $i$ on which the technique has landed such that the next jump goes beyond output value n is selected. The probability distribution of each jump step guarantees that each output value is equally likely to be selected. Therefore, jump hashing is maximally consistent in the face of population increase or decrease, as long as the increase or decrease happens at the ends of the ordered population lines (at the beginning or the end).

As an example, a comparison of the system's jump hashing technique compared with naive assignment of output values illustrates the vast improvement in consistency of results that jump hashing provides over existing techniques. In this particular example, an original model population pool has 10000 people, and a new model population pool adds 1000 to the end of the ordered population line. The jump hashing technique will result in $\frac{10000}{10000+1000} \approx 90\%$ of inputs assigned to the same outputs by both the original model and the new model. However, when applying naive assignment that takes the hash of an identifier modulo 10000 and modulo 11000 in the original model and the new model, respectively, the hash of an identifier must have the same remainder when divided by 10000 and 11000 to be assigned to the same output value. The least common multiplier of 10000 and 11000 is 110000, implying that the hash of the identifier modulo 110000 has to be within 0 and 9999, inclusive, which only occurs for $\frac{10000}{110000} \approx 9\%$ of inputs.

As shown in model set 600, the nodes of the new model have different statistical properties from the nodes of the original model. Node matcher 132 of model generator 130 can perform the node matching process as described in detail above with respect to FIGS. 2 and 3. In this particular example, node matcher 132 has determined that Node1 of the new model corresponds to Node1 of the original model, and that Node2 of the new model corresponds to Node2 of the original model. Population module 136 of model generator 130 can perform the population matching and selection process as described in detail above with respect to FIGS. 4A, 4B, and 5. In this particular example, population module 136 has selected the population pools such that Subset1 and Subset2 of the new model correspond to the same portion of the available population pool as Subset1 and Subset2 of the original model. The statistical properties of Subset1 and Subset2 in model set 600 are probabilities, or weights applied to a selection algorithm, that indicate the likelihood of a value being selected from the subset. Subset1 and Subset2 retain the statistical properties of the new model-SubsetC of model 625 has a probability of 0.7, the same as SubsetC of model set 600, SubsetA of model 625 has a probability of 0.2, the same as SubsetA of model set 600, SubsetB of model 625 has a probability of 0.1, the same as SubsetB of model set 600.

In this particular example, population module 136 of model generator 130 has determined that SubsetA of the new model corresponds to SubsetB of the original model, and that SubsetC of the new model corresponds to SubsetA of the original model. Therefore, when generating third model 625, model generator 130 selects the population pools, such that SubsetC in the third model 625 is in the position of SubsetA in the new model in model set 600, SubsetB in the third model 625 is in the position of SubsetC in the new model in model set 600, and SubsetA in the third model 625 is in the position left open because Node2 of the original model does not have a third subset. SubsetC in the third model 625 corresponds to SubsetA of the original model, and uses the same population pool.

Validation

The system 100 can perform validation of the third, generated model to ensure that the advantages of the process are being provided. The system 100 can use a model differencer that compares two models and determines the difference between them to quickly determine the number of events for which the two models produce different outputs. In some implementations, the model differencer includes an event labeler that output events that are labeled differently between the two models. For example, if an event is labelled with a different attribute from the attributes with which it was previously labelled by the original model, and no changes in node population pool attributes were made, then the event was assigned to a different unique identifier than in the original model. Indeed, particular pools with particular characteristics (e.g., country, number of devices, subscriber or not, etc.) that uses different population pool subsets will have different unique identifiers. In addition, the model differencer can compare different attributes, such as demographics, event identifiers, unique identifiers, etc. This helps distinguish differences so that the differencer can, for example, treat a particular characteristic or variable as known.

The original model should be mathematically equivalent (or as close as possible) to the current production model, or the previous original model if the system was applied to the previous update.

The model generator 130 can (1) compare original model with third model and (2) compare original model with updated model. The difference between the models in (1) should be much smaller than in (2). The difference between the models in (2) represents the differences between the models if they are rolled out naively.

Other ways to make sure the models are statistically equivalent is comparing event ages, multinomial evaluation, and costfree evaluation.

In some implementations, model generator 130 determines whether the third, generated model satisfies Equation 10, where $d(a, b)$ represents the overcount in output of b compared with a.

$$0 = d(model\ C, model\ B) < |d(model\ A, model\ B)| \cong$$

$$d(model\ A, model\ C\ rollout) \ll d(model\ A, model\ B\ rollout) \quad (10)$$

Assigning Output Values

FIG. 6B illustrates an example process for reassigning unique identifiers based on an updated census. In some implementations, the model generator 130 and components that it includes can perform operations as illustrated in FIG. 6B. For example, node matcher 132, hash generator 134, and population module 136 of model generator 130 can perform the reassignment process described as follows. Identifier space 650 shows assignments of unique identifiers to populations within either Node A or Node B. The original census indicates that six unique identifiers are from populations within Node A, and that four unique identifiers are from populations within Node B. The colored ID assignment shows that six nonconsecutive identifiers are from populations within Node A, and are therefore assigned to Node A. The colored ID assignment shows that four consecutive identifiers are from populations within Node B, and are therefore assigned to Node B. A single unique identifier-1005-is left unassigned, or empty.

Initially the model generator 130 generates a third model from a mock census that has desired populations but has arbitrary offsets. Once original model nodes and new model nodes are matched, the node matcher 132 renames the new model nodes according to their original model counterparts.

Subset renaming can be thought of as a simple Constraint Satisfaction Problem. For each node $X$ which has a population of groups $a_1, ..., a_n$ in the original model and $b1, ..., b_m$ in the new model, a collection of constraints $a_1 = b_1, ..., a_{\min(n,m)} = b_{\min(n,m)}$. These constraints act as bounds for some subsets of the new model to certain locations in the identifier space. Then the system goes over the subsets that are still unbound (the subsets that would arise when the population of a bucket increases) from left to right in the tree and assign them to the lowest-numbered, unoccupied position after the offset dictated by their unique identifier attributes.

We define offsets for each set of attributes (including unknown). Initially, each value of a set of attributes was defined an offset and unique identifiers having these attributes were allocated at the offset. Then "unknown" unique identifiers were introduced to the model and unique identifiers of a particular set of attributes were reallocated to be unknowns. By implementing the new technique, the system reuses current offsets for unique identifiers with known attributes, and generates new offsets for unique identifiers with unknown attributes. This technique guarantees that, even with model updates, there will never be inconsistent attribute assignments for a chosen set of attributes.

When a new census is taken, as shown in identifier space 675, the counts show that five unique identifiers are from populations within Node A, and that six unique identifiers are from populations within Node B. Because identifier space 675 contains eleven unique identifiers, reassignment is necessary. Model generator 130 implements the hashing techniques as described above to minimize the number of reassignments, and determines as many of the unique identifiers that were already assigned to either Node A or Node B as possible should remain assigned to either Node A or Node B. Because the new census indicates that Node A has one fewer unique identifier than in the original census, one of the unique identifiers-1011-is released from being assigned to Node A. The new census indicates that Node B has two more unique identifiers than in the original census, and so the unassigned identifier 1005 is assigned to Node B, and the released identifier 1011 is also assigned to Node B. In this way, when the system applies the third, generated model, differences from the assignments of the original model are minimized, while the statistical properties of the new model are retained.

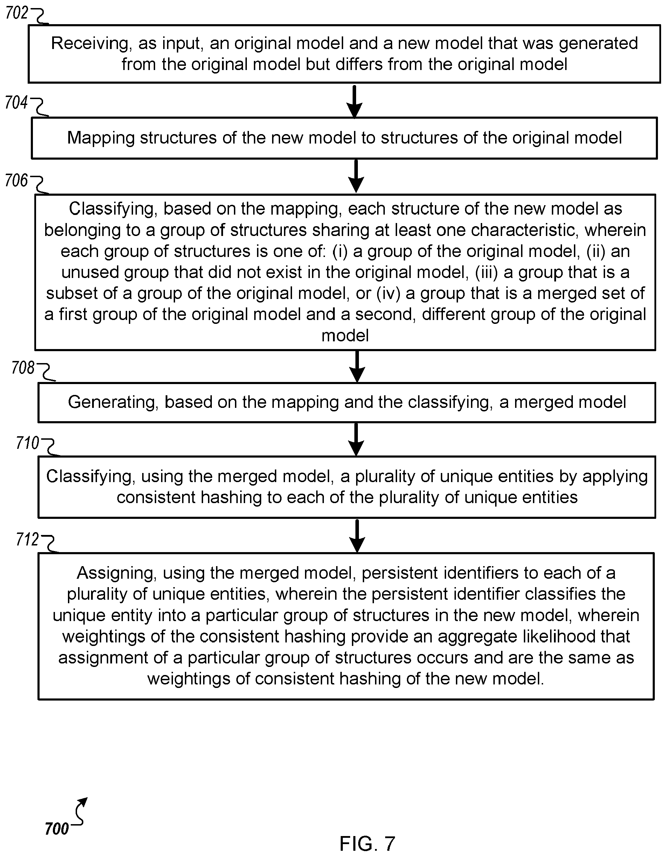

FIG. 7 is a flowchart of an example process 700 for generating an analytical model using a new model and an original model. In some implementations, the model generator 130 and components that it includes can perform operations as illustrated in FIG. 7. For example, node matcher 132, hash generator 134, and population module 136 of model generator 130 can perform the model generation process described as follows, and as described in detail above with respect to FIGS. 2-6B.

The model generator 130 receives, as input, an original model and a new model that was generated from the original model but differs from the original model (700). For example, the model generator 130 can receive an original model and an update to the original model. In some implementations, the model generator 130 can also receive a new model that is not based on the original model.

The model generator 130 maps structures of the new model to structures of the original model (702). For example, node matcher 132 can identify matches between nodes of the original model and the new model and connect the nodes with edges, as described above with respect to FIG. 2.

The model generator 130 classifies, based on the mapping, each structure of the new model as belonging to a group of structures sharing at least one characteristic, wherein each group of structures is one of: (i) a group of the original model, (ii) an unused group that did not exist in the original model, (iii) a group that is a subset of a group of the original model, or (iv) a group that is a merged set of a first group of the original model and a second, different group of the original model (704). For example, node matcher 132 can determine whether each subset of a population pool of a node is an existing subset from the original model, an unused subset that did not exist in the original model, a split of a population pool subset of the original model, or a merge of at least two population pool subsets of the original model, as described above with respect to FIGS. 2, 4A, 4B, and 5.

The model generator 130 names, based on the classifying, the groups of structures of the new model to match names of groups of structures of the original model (708). For example, node matcher 132 and population module 134 can perform the naming process by renaming nodes and population pool subsets as described above with respect to FIGS. 2, 4A, 4B, and 5.

The model generator 130 generates a merged model by applying, based on the named groups of structures of the new model, consistent hashing of the groups of structures of the original model to the named groups of structures of the new model (710). For example, node matcher 132, population module 134, and hash generator 136 can perform the model generation process as described above with respect to FIGS. 2, 6A, and 6B.

The merged models produced by model generator 130 classifies a plurality of unique entities by applying consistent hashing to each of the plurality of unique entities (712). For example, model generator 130 can apply the third, generated model as described above with respect to FIGS. 2, 6A, and 6B.

The model generator 130 assigns, using the merged model, persistent identifiers to each of a plurality of unique entities, wherein the persistent identifier classifies the unique entity into a particular group of structures in the new model, wherein weightings of the consistent hashing provides an aggregate likelihood that assignment of a particular group of structures occurs is a probabilistic difference between the new model and the original model (714). For example, model generator 130 can assign unique identifiers to the input events as described above with respect to FIGS. 2, 6A, and 6B.

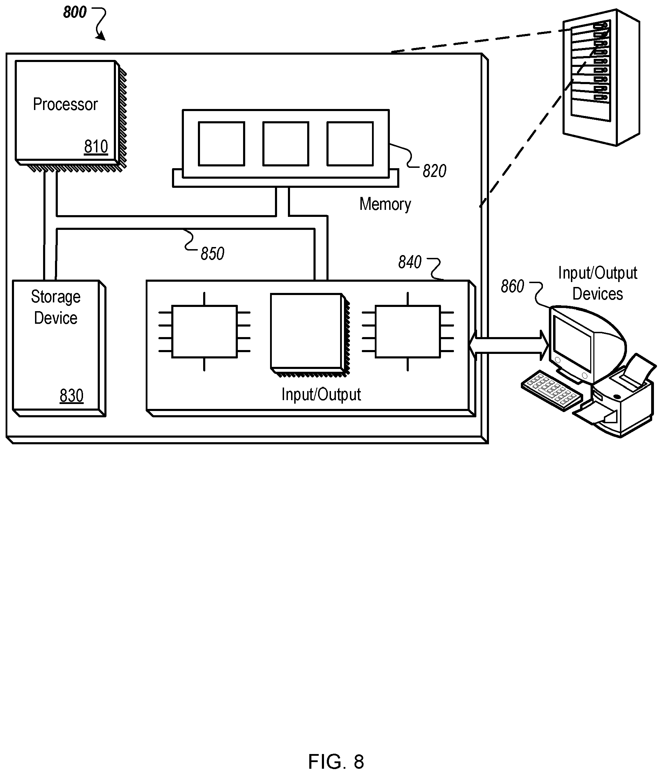

FIG. 8 is block diagram of an example computer system 800 that can be used to perform operations described above. The system 800 includes a processor 810, a memory 820, a storage device 830, and an input/output device 840. Each of the components 810, 820, 830, and 840 can be interconnected, for example, using a system bus 850. The processor 810 is capable of processing instructions for execution within the system 800. In one implementation, the processor 810 is a single-threaded processor. In another implementation, the processor 810 is a multi-threaded processor. The processor 810 is capable of processing instructions stored in the memory 820 or on the storage device 830.

The memory 820 stores information within the system 800. In one implementation, the memory 820 is a computer-readable medium. In one implementation, the memory 820 is a volatile memory unit. In another implementation, the memory 820 is a non-volatile memory unit.

The storage device 830 is capable of providing mass storage for the system 800. In one implementation, the storage device 830 is a computer-readable medium. In various different implementations, the storage device 830 can include, for example, a hard disk device, an optical disk device, a storage device that is shared over a network by multiple computing devices (e.g., a cloud storage device), or some other large capacity storage device.

The input/output device 840 provides input/output operations for the system 800. In one implementation, the input/output device 840 can include one or more network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other input/output devices, e.g., keyboard, printer and display devices 860. Other implementations, however, can also be used, such as mobile computing devices, mobile communication devices, set-top box television client devices, etc.

Although an example processing system has been described in FIG. 8, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage media (or medium) for execution by, or to control the operation of, data processing apparatus. Alternatively, or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including, by way of example, a programmable processor, a computer, a system on a chip, or multiple ones, or combinations, of the foregoing. The apparatus can include special-purpose logic circuitry, e.g., an FPGA (field-programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special-purpose logic circuitry, e.g., an FPGA (field-programmable gate array) or an ASIC (application-specific integrated circuit).

Processors suitable for the execution of a computer program include, by way of example, both general and special-purpose microprocessors. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including, by way of example, semiconductor memory devices, e.g., EPROM, EEPROM, and flash memory devices; magnetic disks, e.g., internal hard disks or removable disks; magneto-optical disks; and CD ROM and DVD-ROM disks. The processor and the memory can be supplemented by, or incorporated in, special-purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

**Claims**

1.    A method performed by one or more data processing apparatus comprising:

> receiving, as input at one or more data processing apparatus, an original model and a new model that was generated from the original model but differs from the original model, wherein each of the original model and the new model include populations assigned to nodes of the models;
> wherein each of the original model and the new model are configured to receive an input of an identifier indicating data and output a particular location in memory to which the data is assigned to be allocated;
> mapping, by the one or more data processing apparatus, structures of the new model to structures of the original model;

classifying, by the one or more data processing apparatus and based on the mapping, each structure of the new model as belonging to a group of structures sharing at least one characteristic;

naming, by the one or more data processing apparatus and based on the classifying, the groups of structures of the new model to match names of groups of structures of the original model;

generating, by the one or more data processing apparatus and based on the mapping and the classifying, a merged model by:

setting up population pools of the merged model by reusing a population for any node common to both the original model and the new model, wherein nodes common to both the original model and the new model are identified based on the naming, and

performing a node by node adjustment to minimize differences between the merged model and the original model while retaining the aggregated statistical properties of the new model; and

classifying, by the one or more data processing apparatus and using the merged model, a plurality of unique entities by applying consistent hashing to each of the plurality of unique entities, including:

assigning, using the merged model, persistent identifiers to each of a plurality of unique entities, wherein the persistent identifier classifies the unique entity into a particular group of structures in the new model.

2. The method of claim 1, wherein each group of structures is one of: (i) a group of the original model, (ii) an unused group that did not exist in the original model, (iii) a group that is a subset of a group of the original model, or (iv) a group that is a merged set of a first group of the original model and a second, different group of the original model.

3. The method of claim 1, wherein weightings of the consistent hashing provide an aggregate likelihood that assignment of a particular group of structures occurs and are the same as weightings of consistent hashing of the new model.

4. The method of claim 1, wherein the original model, the new model, and the merged model implement a tree structure.

5. The method of claim 1, wherein the assigning comprises applying jump hashing of an ordered set of the persistent identifiers to the unique entity.

6. The method of claim 1, wherein the consistent hashing is a weighted consistent hashing with affinity ranking.

7. The method of claim 1, wherein the merged model generates a probability of a unique entity being assigned to a persistent identifier in a particular group of structures.

8. The method of claim 7, wherein the particular group of structures indicates a set of demographic attributes of a persistent identifier in the particular group of structures.

9. The method of claim 1, wherein the naming is performed to minimize a number of instances in which a particular entity is labelled with a first persistent identifier by the original model, and the particular entity is labelled with a second, different persistent identifier by the merged model.

10. A system comprising:

one or more processors; and
one or more memory elements including instructions that, when executed, cause the one or more processors to perform the method of any of claims 1 to 9.

11. A computer storage medium encoded with instructions that when executed by a distributed computing system cause the distributed computing system to perform operations comprising:

receiving, as input at one or more data processing apparatus, an original model and a new model that was generated from the original model but differs from the original model, wherein each of the original model and the new model include populations assigned to nodes of the models;

wherein each of the original model and the new model are configured to receive an input of an identifier indicating data and output a particular location in memory to which the data is assigned to be allocated;

mapping, by the one or more data processing apparatus, structures of the new model to structures of the original model;

classifying, by the one or more data processing apparatus and based on the mapping, each structure of the new model as belonging to a group of structures sharing at least one characteristic;

naming, by the one or more data processing apparatus and based on the classifying, the groups of structures of the new model to match names of groups of structures of the original model;

generating, by the one or more data processing apparatus and based on the mapping and classifying, a merged model by:

setting up population pools of the merged model by reusing a population for any node common to both the original model and the new model, wherein nodes common to both the original model and the new model are identified based on the naming, and

performing a node by node adjustment to minimize differences between the merged model and the original model while retaining the aggregated statistical properties of the new model; and

classifying, by the one or more data processing apparatus and using the merged model, a plurality of unique entities by applying consistent hashing to each of the plurality of unique entities, including:

assigning, using the merged model, persistent identifiers to each of a plurality of unique entities, wherein the persistent identifier classifies the unique entity into a particular group of structures in the new model.

12. The computer storage medium of claim 11, wherein each group of structures is one of: (i) a group of the original model, (ii) an unused group that did not exist in the original model, (iii) a group that is a subset of a group of the original model, or (iv) a group that is a merged set of a first group of the original model and a second, different group of the original model.

13. The computer storage medium of claim 11, wherein weightings of the consistent hashing provide an aggregate likelihood that assignment of a particular group of structures occurs and are the same as weightings of consistent hashing of the new model.

14. The computer storage medium of claim 11, wherein the naming is performed to minimize a number of instances in which a particular entity is labelled with a first persistent identifier by the original model, and the particular entity is labelled with a second, different persistent identifier by the merged model.

**Patentansprüche**

1. Verfahren, das von einer oder mehreren Datenverarbeitungsvorrichtungen durchgeführt wird, umfassend:

Empfangen eines Originalmodells und eines aus dem Originalmodell generierten neuen Modells, das sich jedoch von dem Originalmodell unterscheidet, als Eingabe an einer oder mehreren Datenverarbeitungsvorrichtungen, wobei das Originalmodell und das neue Modell jeweils Populationen beinhalten, die Knoten der Modelle zugewiesen sind;

wobei das Originalmodell und das neue Modell jeweils zum Empfangen einer Eingabe einer Kennung, die Daten angibt, und zum Ausgeben eines bestimmten Ortes in dem Speicher, der für die Zuweisung der Daten bestimmt ist, konfiguriert sind;

Zuordnen von Strukturen des neuen Modells zu Strukturen des Originalmodells durch die eine oder die mehreren Datenverarbeitungsvorrichtungen;

Einstufen jeder Struktur des neuen Modells durch die eine oder die mehreren Datenverarbeitungsvorrichtungen und basierend auf dem Zuordnen als zu einer Gruppe von Strukturen mit mindestens einem Merkmal gehörend;

Benennen der Gruppen von Strukturen des neuen Modells durch die eine oder die mehreren Datenverarbeitungsvorrichtungen und basierend auf dem Einstufen entsprechend den Benennungen von Gruppen von Strukturen des Originalmodells;

Generieren eines zusammengeführten Modells durch die eine oder die mehreren Datenverarbeitungsvorrichtungen und basierend auf dem Zuordnen und dem Einstufen durch:

Einrichten von Populationspools des zusammengeführten Modells durch Wiederverwenden einer Population für jeden Knoten, der sowohl dem Originalmodell als auch dem neuen Modell gemeinsam ist, wobei Knoten, die sowohl dem Originalmodell als auch dem neuen Modell gemeinsam sind, basierend auf der Benennung identifiziert werden, und

Durchführen einer knotenweisen Anpassung, um Unterschiede zwischen dem zusammengeführten Modell und dem Originalmodell zu minimieren, während die aggregierten statistischen Eigenschaften des neuen Modells erhalten bleiben; und

Einstufen einer Vielzahl von eindeutigen Entitäten durch die eine oder die mehreren Datenverarbeitungsvorrichtungen und unter Verwendung des zusammengeführten Modells durch Anwenden eines konsistenten Hashings auf jede der Vielzahl von eindeutigen Entitäten, beinhaltend:

Zuweisen von persistenten Kennungen zu jeder einer Vielzahl von eindeutigen Entitäten unter Verwendung des zusammengeführten Modells, wobei die persistente Kennung die eindeutige Entität in eine bestimmte Gruppe von Strukturen in dem neuen Modell einstuft.

2. Verfahren nach Anspruch 1, wobei jede Gruppe von Strukturen eine der folgenden ist: (i) eine Gruppe des Originalmodells, (ii) eine unbenutzte Gruppe, die im Originalmodell nicht vorhanden war, (iii) eine Gruppe, die eine Teilmenge einer Gruppe des Originalmodells ist, oder (iv) eine Gruppe, die eine zusammengeführte Menge einer ersten Gruppe des Originalmodells und einer zweiten, davon verschiedenen Gruppe des Originalmodells ist.

3. Verfahren nach Anspruch 1, wobei Gewichtungen des konsistenten Hashings eine aggregierte Wahrscheinlichkeit bereitstellen, dass eine Zuweisung einer bestimmten Gruppe von Strukturen auftritt, und diese Gewichtungen dieselben wie Gewichtungen des konsistenten Hashings des neuen Modells sind.

4. Verfahren nach Anspruch 1, wobei das Originalmodell, das neue Modell und das zusammengeführte Modell eine Baumstruktur implementieren.

5. Verfahren nach Anspruch 1, wobei das Zuweisen das Anwenden von Sprunghashing einer geordneten Menge der persistenten Kennungen auf die eindeutige Entität umfasst.

6. Verfahren nach Anspruch 1, wobei das konsistente Hashing ein gewichtetes konsistentes Hashing mit Affinitätsranking ist.

7. Verfahren nach Anspruch 1, wobei das zusammengeführte Modell eine Wahrscheinlichkeit generiert, dass eine eindeutige Entität einer persistenten Kennung in einer bestimmten Gruppe von Strukturen zugewiesen wird.

8. Verfahren nach Anspruch 7, wobei die bestimmte Gruppe von Strukturen einen Satz von demografischen Attributen einer persistenten Kennung in der bestimmten Gruppe von Strukturen angibt.

9. Verfahren nach Anspruch 1, wobei die Benennung durchgeführt wird, um eine Anzahl von Fällen zu minimieren, in denen eine bestimmte Entität durch das Originalmodell mit einer ersten persistenten Kennung markiert wird, und die bestimmte Entität durch das zusammengeführte Modell mit einer zweiten, davon verschiedenen persistenten Kennung markiert wird.

10. System, umfassend:

einen oder mehrere Prozessoren; und

ein oder mehrere Speicherelemente, die Anweisungen beinhalten, die bei Ausführung den einen oder die mehreren Prozessoren veranlassen, das Verfahren nach einem der Ansprüche 1 bis 9 durchzuführen.

11. Computerspeichermedium, das mit Anweisungen codiert ist, die bei Ausführung durch ein verteiltes Computersystem das verteilte Computersystem zum Durchführen von Operationen veranlassen, umfassend:

Empfangen eines Originalmodells und eines aus dem Originalmodell generierten neuen Modells, das sich jedoch von dem Originalmodell unterscheidet, als Eingabe an einer oder mehreren Datenverarbeitungsvorrichtungen, wobei das Originalmodell und das neue Modell jeweils Populationen beinhalten, die Knoten der Modelle zugewiesen sind;

wobei das Originalmodell und das neue Modell jeweils zum Empfangen einer Eingabe einer Kennung, die Daten angibt, und zum Ausgeben eines bestimmten Ortes in dem Speicher, der für die Zuweisung der Daten bestimmt ist, konfiguriert sind;

Zuordnen von Strukturen des neuen Modells zu Strukturen des Originalmodells durch die eine oder die mehreren Datenverarbeitungsvorrichtungen;

Einstufen jeder Struktur des neuen Modells durch die eine oder die mehreren Datenverarbeitungsvorrichtungen und basierend auf dem Zuordnen als zu einer Gruppe von Strukturen mit mindestens einem Merkmal gehörend;
Benennen der Gruppen von Strukturen des neuen Modells durch die eine oder die mehreren Datenverarbeitungsvorrichtungen und basierend auf dem Einstufen entsprechend den Benennungen von Gruppen von Strukturen des Originalmodells;
Generieren eines zusammengeführten Modells durch die eine oder die mehreren Datenverarbeitungsvorrichtungen und basierend auf dem Zuordnen und Einstufen durch:

Einrichten von Populationspools des zusammengeführten Modells durch Wiederverwenden einer Population für jeden Knoten, der sowohl dem Originalmodell als auch dem neuen Modell gemeinsam ist, wobei Knoten, die sowohl dem Originalmodell als auch dem neuen Modell gemeinsam sind, basierend auf der Benennung identifiziert werden, und
Durchführen einer knotenweisen Anpassung, um Unterschiede zwischen dem zusammengeführten Modell und dem Originalmodell zu minimieren, während die aggregierten statistischen Eigenschaften des neuen Modells erhalten bleiben; und
Einstufen einer Vielzahl von eindeutigen Entitäten durch die eine oder die mehreren Datenverarbeitungsvorrichtungen und unter Verwendung des zusammengeführten Modells durch Anwenden eines konsistenten Hashings auf jede der Vielzahl von eindeutigen Entitäten, beinhaltend:
Zuweisen von persistenten Kennungen zu jeder einer Vielzahl von eindeutigen Entitäten unter Verwendung des zusammengeführten Modells, wobei die persistente Kennung die eindeutige Entität in eine bestimmte Gruppe von Strukturen in dem neuen Modell einstuft.

12. Computerspeichermedium nach Anspruch 11, wobei jede Gruppe von Strukturen eine der folgenden ist: (i) eine Gruppe des Originalmodells, (ii) eine unbenutzte Gruppe, die im Originalmodell nicht vorhanden war, (iii) eine Gruppe, die eine Teilmenge einer Gruppe des Originalmodells ist, oder (iv) eine Gruppe, die eine zusammengeführte Menge einer ersten Gruppe des Originalmodells und einer zweiten, davon verschiedenen Gruppe des Originalmodells ist.

13. Computerspeichermedium nach Anspruch 11, wobei Gewichtungen des konsistenten Hashings eine aggregierte Wahrscheinlichkeit bereitstellen, dass eine Zuweisung einer bestimmten Gruppe von Strukturen auftritt, und diese Gewichtungen dieselben wie Gewichtungen des konsistenten Hashings des neuen Modells sind.

14. Computerspeichermedium nach Anspruch 11, wobei die Benennung durchgeführt wird, um eine Anzahl von Fällen zu minimieren, in denen eine bestimmte Entität durch das Originalmodell mit einer ersten persistenten Kennung markiert wird, und die bestimmte Entität durch das zusammengeführte Modell mit einer zweiten, davon verschiedenen persistenten Kennung markiert wird.

**Revendications**

1. Procédé exécuté par un ou plusieurs appareils de traitement de données comprenant :

la réception, en entrée au niveau d'un ou de plusieurs appareils de traitement de données, d'un modèle d'origine et d'un nouveau modèle qui a été généré à partir du modèle d'origine mais diffère du modèle d'origine, dans lequel chacun du modèle d'origine et du nouveau modèle comporte des populations attribuées à des noeuds des modèles ;
dans lequel chacun du modèle d'origine et du nouveau modèle est configuré pour recevoir une entrée d'un identifiant indiquant des données et délivrer un emplacement particulier dans la mémoire auquel les données sont attribuées pour être allouées ;
le mappage, par les un ou plusieurs appareils de traitement de données, de structures du nouveau modèle avec les structures du modèle d'origine ;
la classification, par les un ou plusieurs appareils de traitement de données et sur la base du mappage, de chaque structure du nouveau modèle comme appartenant à un groupe de structures partageant au moins une caractéristique ;
le nommage, par les un ou plusieurs appareils de traitement de données et sur la base de la classification, des groupes de structures du nouveau modèle pour correspondre aux noms de groupes de structures du modèle d'origine ;
la génération, par les un ou plusieurs appareils de traitement de données et sur la base du mappage et de la classification, d'un modèle fusionné par :

l'établissement de pools de population du modèle fusionné en réutilisant une population pour tout noeud commun au modèle d'origine et au nouveau modèle, dans lequel les noeuds communs au modèle d'origine et au nouveau modèle sont identifiés sur la base du nommage, et

l'exécution d'un réglage noeud par noeud pour minimiser des différences entre le modèle fusionné et le modèle d'origine tout en conservant les propriétés statistiques agrégées du nouveau modèle ; et

la classification, par les un ou plusieurs appareils de traitement de données et à l'aide du modèle fusionné, d'une pluralité d'entités uniques en appliquant un hachage cohérent à chacune de la pluralité d'entités uniques, comportant :

l'attribution, à l'aide du modèle fusionné, d'identifiants persistants à chacune d'une pluralité d'entités uniques, dans lequel l'identifiant persistant classe l'entité unique dans un groupe particulier de structures dans le nouveau modèle.

2. Procédé selon la revendication 1, dans lequel chaque groupe de structures est l'un parmi : (i) un groupe du modèle d'origine, (ii) un groupe inutilisé qui n'existait pas dans le modèle d'origine, (iii) un groupe qui est un sous-ensemble d'un groupe du modèle d'origine, ou (iv) un groupe qui est un ensemble fusionné d'un premier groupe du modèle d'origine et d'un second groupe différent du modèle d'origine.

3. Procédé selon la revendication 1, dans lequel des pondérations du hachage cohérent fournissent une probabilité globale que l'attribution d'un groupe particulier de structures se produise et sont les mêmes que des pondérations du hachage cohérent du nouveau modèle.

4. Procédé selon la revendication 1, dans lequel le modèle d'origine, le nouveau modèle et le modèle fusionné mettent en oeuvre une structure arborescente.

5. Procédé selon la revendication 1, dans lequel l'attribution comprend l'application d'un hachage par saut d'un ensemble ordonné des identifiants persistants à l'entité unique.

6. Procédé selon la revendication 1, dans lequel le hachage cohérent est un hachage cohérent pondéré avec classement par affinité.

7. Procédé selon la revendication 1, dans lequel le modèle fusionné génère une probabilité qu'une entité unique soit attribuée à un identifiant persistant dans un groupe particulier de structures.

8. Procédé selon la revendication 7, dans lequel le groupe particulier de structures indique un ensemble d'attributs démographiques d'un identifiant persistant dans le groupe particulier de structures.

9. Procédé selon la revendication 1, dans lequel le nommage est exécuté pour minimiser un nombre de cas dans lesquels une entité particulière est étiquetée avec un premier identifiant persistant par le modèle d'origine, et l'entité particulière est étiquetée avec un second identifiant persistant différent par le modèle fusionné.

10. Système comprenant :

un ou plusieurs processeurs ; et
un ou plusieurs éléments de mémoire comportant des instructions qui, lorsqu'elles sont exécutées, amènent les un ou plusieurs processeurs à exécuter le procédé selon l'une quelconque des revendications 1 à 9.

11. Support de stockage informatique codé avec des instructions qui, lorsqu'elles sont exécutées par un système informatique distribué, amènent le système informatique distribué à exécuter des opérations comprenant :

la réception, en entrée au niveau d'un ou de plusieurs appareils de traitement de données, d'un modèle d'origine et d'un nouveau modèle qui a été généré à partir du modèle d'origine mais diffère du modèle d'origine, dans lequel chacun du modèle d'origine et du nouveau modèle comporte des populations attribuées à des noeuds des modèles ;

dans lequel chacun du modèle d'origine et du nouveau modèle est configuré pour recevoir une entrée d'un identifiant indiquant des données et délivrer un emplacement particulier dans la mémoire auquel les données sont attribuées pour être allouées ;

le mappage, par les un ou plusieurs appareils de traitement de données, de structures du nouveau modèle avec les structures du modèle d'origine ;

la classification, par les un ou plusieurs appareils de traitement de données et sur la base du mappage, de chaque structure du nouveau modèle comme appartenant à un groupe de structures partageant au moins une caractéristique ;

le nommage, par les un ou plusieurs appareils de traitement de données et sur la base de la classification, des groupes de structures du nouveau modèle pour correspondre aux noms de groupes de structures du modèle d'origine ;

la génération, par les un ou plusieurs appareils de traitement de données et sur la base du mappage et d'une classification, d'un modèle fusionné par :

l'établissement de pools de population du modèle fusionné en réutilisant une population pour tout noeud commun au modèle d'origine et au nouveau modèle, dans lequel les noeuds communs au modèle d'origine et au nouveau modèle sont identifiés sur la base du nommage, et

l'exécution d'un réglage noeud par noeud pour minimiser des différences entre le modèle fusionné et le modèle d'origine tout en conservant les propriétés statistiques agrégées du nouveau modèle ; et

la classification, par les un ou plusieurs appareils de traitement de données et à l'aide du modèle fusionné, d'une pluralité d'entités uniques en appliquant un hachage cohérent à chacune de la pluralité d'entités uniques, comportant :

l'attribution, à l'aide du modèle fusionné, d'identifiants persistants à chacune d'une pluralité d'entités uniques, dans lequel l'identifiant persistant classe l'entité unique dans un groupe particulier de structures dans le nouveau modèle.

12. Support de stockage informatique selon la revendication 11, dans lequel chaque groupe de structures est l'un parmi : (i) un groupe du modèle d'origine, (ii) un groupe inutilisé qui n'existait pas dans le modèle d'origine, (iii) un groupe qui est un sous-ensemble d'un groupe du modèle d'origine, ou (iv) un groupe qui est un ensemble fusionné d'un premier groupe du modèle d'origine et d'un second groupe différent du modèle d'origine.

13. Support de stockage informatique selon la revendication 11, dans lequel des pondérations du hachage cohérent fournissent une probabilité globale que l'attribution d'un groupe particulier de structures se produise et sont les mêmes que des pondérations du hachage cohérent du nouveau modèle.

14. Support de stockage informatique selon la revendication 11, dans lequel le nommage est exécuté pour minimiser un nombre de cas dans lesquels une entité particulière est étiquetée avec un premier identifiant persistant par le modèle d'origine, et l'entité particulière est étiquetée avec un second identifiant persistant différent par le modèle fusionné.

100

104

106

Electronic Doc
Servers

Electronic Docs
105

Client
Devices

Request
108

Reply
114

Network
102

Request
108

Reply
114

Digital Component
Distribution System
110

Model Generator
130

Node
Matcher
132

Hash
Generator
134

Population
Module
136

Digital Component
Database
112

FIG. 1

FIG. 2

FIG. 3

| Original Model A | New Model A | Generated Model A |
|---|---|---|
| population {<br>  group {<br>    population offset: 10000<br>    total population: 3000<br>  }<br>} | population {<br>  group {<br>    population offset: 40000<br>    total population: 1000<br>  }<br>} | population {<br>  group {<br>    population offset: 10000<br>    total population: 1000<br>  }<br>} |

⌒ 402

⌒ 406

| 5000 | 10000 | 15000 | 20000 | 25000 |

used population ▨

unused population ☐

400 ⌒

| Original Model B | New Model B | Generated Model B |
|---|---|---|
| population {<br>  group {<br>    population offset: 14000<br>    total population: 3000<br>  }<br>} | population {<br>  group {<br>    population offset: 40000<br>    total population: 5000<br>  }<br>} | population {<br>  group {<br>    population offset: 14000<br>    total population: 3000<br>  }<br>  group {<br>    population offset: 20000<br>    total population: 2000<br>  }<br>} |

⌒ 404

FIG. 4A

EP 3 704 600 B1

| Original Model C | New Model C | Generated Model C |
|---|---|---|
| population {<br>  group {<br>    population offset: 1000<br>    total population: 1000<br>  }<br>  group {<br>    population offset: 3000<br>    total population: 1000<br>  }<br>  group {<br>    population offset: 3000<br>    total population: 1000<br>  }<br>} | population {<br>  group {<br>    population offset: 10000<br>    total population: 3000<br>  }<br>} | population {<br>  group {<br>    population offset: 1000<br>    total population: 1000<br>  }<br>  group {<br>    population offset: 3000<br>    total population: 1000<br>  }<br>  group {<br>    population offset: 3000<br>    total population: 1000<br>  }<br>} |

450

FIG. 4B

New1

New2

New3

Model 1

Model 2

Model 3

New Models

[50000, 53000)

[60000, 63000)

Original Models

a: [10000, 13000)

b: [20000, 21000)

Model 1

Model 2

Model 3

Original1

Original2

Original3

510

With Matched/Merged Shadow Populations

New1

New2

New3

Model 1

Model 2

Model 3

New Models

[50000, 53000)

[60000, 63000)

Original Models

ab: [10000, 13000)
[20000, 21000)

Model 1

Model 2

Model 3

Original1

Original2

Original3

550

500

model

populations

FIG. 5

New Model

Original Model

600

Generated Model After Mapping

625

FIG. 6A

EP 3 704 600 B1

**650**

**Original Census**

| Counts: | |
|---|---|
| **Node A** | **Node B** |
| 6 | 4 |

| **Colored ID** |
|---|
| 1001 |
| 1002 |
| 1003 |
| 1004 |
| 1005 (empty) |
| 1006 |
| 1007 |
| 1008 |
| 1009 |
| 1010 |
| 1011 |

**675**

**New Census**

| Counts: | |
|---|---|
| **Node A** | **Node B** |
| 5 | 6 |

| **Colored ID** | **reason** |
|---|---|
| 1001 | matched |
| 1002 | matched |
| 1003 | matched |
| 1004 | matched |
| 1005 | vacant and then used |
| 1006 | matched |
| 1007 | matched |
| 1008 | matched |
| 1009 | matched |
| 1010 | matched |
| 1011 | released and then used |

EP 3 704 600 B1

FIG. 6B

702 ⌇

> Receiving, as input, an original model and a new model that was generated from the original model but differs from the original model

704 ⌇

> Mapping structures of the new model to structures of the original model

706 ⌇

> Classifying, based on the mapping, each structure of the new model as belonging to a group of structures sharing at least one characteristic, wherein each group of structures is one of: (i) a group of the original model, (ii) an unused group that did not exist in the original model, (iii) a group that is a subset of a group of the original model, or (iv) a group that is a merged set of a first group of the original model and a second, different group of the original model

708 ⌇

> Generating, based on the mapping and the classifying, a merged model

710 ⌇

> Classifying, using the merged model, a plurality of unique entities by applying consistent hashing to each of the plurality of unique entities

712 ⌇

> Assigning, using the merged model, persistent identifiers to each of a plurality of unique entities, wherein the persistent identifier classifies the unique entity into a particular group of structures in the new model, wherein weightings of the consistent hashing provide an aggregate likelihood that assignment of a particular group of structures occurs and are the same as weightings of consistent hashing of the new model.

700 ⌇

FIG. 7

800

Processor

810

820

Memory

850

840

Storage
Device

830

Input/Output

860

Input/Output
Devices

FIG. 8

**EP 3 704 600 B1**

**Patent documents cited in the description**

- WO 2017181932 A1

- US 9098326 B1